(19) Europäisches Patentamt / European Patent Office / Office européen des brevets

(11) **EP 3 901 494 B1**

(12) **EUROPEAN PATENT SPECIFICATION**

(45) Date of publication and mention
of the grant of the patent:
**11.01.2023 Bulletin 2023/02**

(21) Application number: **20752115.4**

(22) Date of filing: **06.02.2020**

(51) International Patent Classification (IPC):
**F16H 59/36** (2006.01)  **F16H 59/50** (2006.01)
**F16H 61/16** (2006.01)  **F16H 61/682** (2006.01)
**F16H 59/44** (2006.01)

(52) Cooperative Patent Classification (CPC):
**F16H 59/44; F16H 61/0213; F16H 61/16;**
**F16H 61/682;** B60Y 2200/12; B60Y 2300/1815;
F16H 59/50; F16H 2061/163

(86) International application number:
**PCT/JP2020/004673**

(87) International publication number:
**WO 2020/162569 (13.08.2020 Gazette 2020/33)**

(54) **LEANING VEHICLE**

NEIGEFAHRZEUG

VÉHICULE INCLINABLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.02.2019 JP 2019019427**

(43) Date of publication of application:
**27.10.2021 Bulletin 2021/43**

(73) Proprietor: **Yamaha Hatsudoki Kabushiki Kaisha**
**Iwata-shi, Shizuoka 438-8501 (JP)**

(72) Inventor: **OHATA Shinobu**
**Iwata-shi, Shizuoka 438-8501 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
EP-A2- 2 363 330      DE-A1-102012 200 471
JP-A- H0 293 166      JP-A- 2007 218 269
JP-A- 2009 127 689      JP-A- 2012 197 809
JP-A- 2016 536 549      US-A1- 2007 186 705

## Description

TECHNICAL FIELD

The present invention relates to a leaning vehicle that leans leftward when turning to the left and leans rightward when turning to the right.

BACKGROUND ART

A known gear-shift controller of a motorcycle controls a gear-shift of the gear-shift controller. As such a gear-shift controller, JP2012-197809A, for example, discloses a gear-shift controller of a motorcycle capable of performing gear-shift control in different modes in transferring a driving force in accordance with a roll angle of a vehicle body.

Specifically, the gear-shift controller disclosed in the aforementioned document includes a roll angle detector that detects a roll angle of the motorcycle, and a controller configured not to perform normal gear-shift control if the roll angle exceeds a first roll angle. The controller performs a gear-shift by soft gear-shift control in which a change of a driving force with time is smaller than that in the normal gear-shift control in a range where the roll angle is from the first roll angle to a second roll angle larger than the first roll angle.

In the gear-shift controller disclosed in aforementioned document, the controller also determines, at the time of the soft gear-shift control, whether the motorcycle is entering a corner or leaving a corner based on a relationship between a yaw angle and the roll angle. When the controller determines that the motorcycle is entering a corner, the controller performs the soft gear-shift control only for a shift-down, while inhibiting a shift-up. When the controller determines that the motorcycle is leaving a corner, the controller performs the soft gear-shift control only for a shift-up, while inhibiting a shift-down.

DE 10 2012 200471 A1 discloses a speed change controlling apparatus for a motorcycle, in which the mode of driving force transmission is depends upon the roll angle of a vehicle body. When a roll angle is within a range from a second roll angle, which corresponds to a full bank state, to a first roll angle, speed change operation is carried out by soft speed change control in which variation of the driving force with respect to time is smaller than that by normal speed change control. If the roll angle is within another range from the first roll angle to a third roll angle, then normal speed change is carried out and if the roll angle is within a further range from an uprightly standing state to the third roll angle, then speed change operation is executed by direct speed change. When the roll angle is greater than the second roll angle, speed change is inhibited.

US 2007/186705 A1 teaches a control method for a transmission for a motorcycle having a plurality of shift gear trains such that the combination of gears meshing with each other is changed by driving an actuator to change a shift position. When a vehicle body inclination angle as a sideward inclination angle of a vehicle body of the motorcycle during running of the motorcycle becomes greater than or equal to a predetermined angle, a change in shift position in the transmission is inhibited.

SUMMARY OF INVENTION

TECHNICAL PROBLEM

In the gear-shift controller disclosed in JP2012-197809A, the controller changes gear-shift control depending on whether the motorcycle is entering a corner or leaving a corner.

While a leaning vehicle turns in a lean state, it is desirable to reduce a posture change of the leaning vehicle caused by a gear-shift. That is, while the leaning vehicle turns in the lean state, it is desirable to perform a gear-shift so as not to cause a posture change of the vehicle.

It is therefore an object of the present invention to provide a leaning vehicle capable of reducing a posture change of the leaning vehicle caused by a gear-shift while the leaning vehicle turns in a lean state.

SOLUTION TO PROBLEM

An inventor of the present invention studied a leaning vehicle capable of reducing a posture change of the leaning vehicle caused by a gear-shift while the leaning vehicle turns in a lean state.

According to the present invention, the problem is solved by a leaning vehicle according to claim 1.

In a case of changing the plurality of the gear stages in the multi-stage automatic transmission while the leaning vehicle turns in the lean state, there is a possibility of a change of a lean angle at which the leaning vehicle turns in the lean state. Thus, while the leaning vehicle turns in the lean state, there is a possibility of a posture change of the leaning vehicle due to a gear-shift of the multi-stage automatic transmission.

In the configuration described above, therefore, the gear-shift controller inhibits changing of the plurality of the gear stages in the multi-stage automatic transmission or suppresses a change of the driving force by changing the plurality of the gear stages, based on the physical quantity associated with the radius of turn of a corner that the leaning vehicle turns in the lean state. Thus, while the leaning vehicle turns in the lean state, it is possible to suppress a change of the lean angle at which the leaning vehicle turns in the lean state. Accordingly, it is possible to reduce the posture change occurring in the leaning vehicle while the leaning vehicle turns in the lean state.

The leaning vehicle according to the present invention includes the following configuration. The physical quantity associated with the radius of turn includes at least one of a vehicle speed and a physical quantity associated with a lean angle of the leaning vehicle, the vehicle speed and a yaw rate of the leaning vehicle, or a radius of curvature of a corner that the leaning vehicle turns in the lean state, in a state where the leaning vehicle turns in the lean state.

With this configuration, it is possible to inhibit changing of the plurality of the gear stages in the multi-stage automatic transmission or suppress a change of the driving force by changing the plurality of the gear stages, using the physical quantity associated with the radius of turn exerted on the leaning vehicle, in the state where the leaning vehicle turns in the lean state.

In another aspect, the leaning vehicle according to the present invention preferably includes the following configuration. In a case where the leaning vehicle turns a plurality of corners, each having a different radius of curvature, in the lean state at a same lean angle, the gear-shift controller is configured to inhibit changing of the plurality of the gear stages in the multi-stage automatic transmission or suppress a change of the driving force by changing the plurality of the gear stages, in accordance with the radius of curvature of each of the corners, while the leaning vehicle turns in the lean state.

Even when the lean angle at which the leaning vehicle turns a plurality of corners, each having a different radius of curvature, in the lean state is the same, while the leaning vehicle turns a corner having a small radius of curvature in the lean state, the lean angle at which the leaning vehicle turns in the lean state is likely to change by changing the plurality of the gear stages in the multi-stage automatic transmission. As in the above-described configuration, therefore, by inhibiting changing of the plurality of the gear stages in the multi-stage automatic transmission or suppressing a change of the driving force by changing the plurality of the gear stages, in accordance with the radius of curvature of each of the corners, the posture change of the leaning vehicle due to changing of the plurality of the gear stages in the multi-stage automatic transmission can be reduced.

In another aspect, the leaning vehicle according to the present invention preferably includes the following configuration. The gear-shift controller is configured to inhibit changing of the plurality of the gear stages in the multi-stage automatic transmission or suppress a change of the driving force by changing the plurality of the gear stages while the leaning vehicle turns in the lean state in a case where the radius of curvature of each of the corners that the leaning vehicle turns in the lean state is smaller than or equal to a threshold.

When the radius of curvature of a corner is smaller than or equal to the threshold, in the leaning vehicle that turns the corner in a lean state, the lean angle at which the leaning vehicle turns in the lean state is likely to change by changing the plurality of the gear stages in the multi-stage automatic transmission. As described above, therefore, when the radius of curvature of the corner is smaller than or equal to the threshold, changing of the plurality of the gear stages in the multi-stage automatic transmission is inhibited or a change of the driving force by changing the plurality of the gear stages is suppressed while the leaning vehicle turns in the lean state. With this configuration, it is possible to reduce the posture change occurring in the leaning vehicle by changing the plurality of the gear stages in the multi-stage automatic transmission.

The terminology used herein is for the purpose of describing particular embodiments only and is not intended to be limiting of the invention as defined in the appended claims.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention as defined in the appended claims.

In this specification, embodiments of a leaning vehicle with a driving source according to the present invention will be described.

In the following description, for purposes of explanation, numerous specific details are set forth in order to provide a thorough understanding of the present invention. It will be evident, however, to one skilled in the art that the present invention may be practiced without these specific details.

The following pages are to be considered as an exemplification of the invention, and is not intended to limit the invention to the specific embodiments illustrated by the figures or description below.

[Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as threewheeled vehicles and four-wheeled vehicles as well as two-wheeled vehicles.

[Driving Source]

A driving source herein refers to a device that applies a driving force to wheels. The driving source includes, for example, a device capable of applying a driving force, such as an engine, a motor, and a hybrid system combining an engine and a motor.

[Automatic Transmission]

An automatic transmission herein refers to a device that performs a gear-shift based on a signal generated by a gear-shift controller. Thus, the automatic transmission performs a gear-shift without a gear-shift operation by a driver.

[Vehicle State]

A vehicle state herein refers to information regarding a state of the leaning vehicle while the leaning vehicle turns in a lean state, that is, a posture of the leaning vehicle, a traveling speed (a vehicle speed) of the leaning vehicle, and a centrifugal force exerted on the leaning vehicle and a driving force, for example. Specifically, the vehicle state includes, for example, an inclination angle (a lean angle) while the leaning vehicle turns in a lean state, a vehicle speed when the leaning vehicle turns, a physical quantity associated with a centrifugal force exerted on the leaning vehicle caused by its turning, a physical quantity associated with a radius of turn, and a physical quantity associated with a driving force transferred to wheels from a driving source of the leaning vehicle through a multi-stage automatic transmission. The physical quantity associated with a centrifugal force includes at least one of a vehicle speed of the leaning vehicle, a yaw rate of the leaning vehicle, or a radius of curvature of a corner that the leaning vehicle turns in a lean state, in a state where the leaning vehicle turns in the lean state. The physical quantity associated with a radius of turn includes at least one of a vehicle speed and a physical quantity associated with a lean angle of the leaning vehicle, the vehicle speed and a yaw rate of the leaning vehicle, or a radius of curvature of a corner that the leaning vehicle turns in a lean state, in a state where the leaning vehicle turns in the lean state.

[Posture Change]

A posture change of the leaning vehicle herein refers to a change of the posture of the leaning vehicle caused by a change in a lean of the leaning vehicle in a left-right direction. That is, the posture change of the leaning vehicle refers to a change of the posture of the leaning vehicle caused by, for example, leftward leaning or rightward leaning of the leaning vehicle while the leaning vehicle turns in a lean state.

[Lean Angle]

A lean angle herein refers to an angle between a vertical line of a road surface and an up-down direction reference line of the leaning vehicle when the leaning vehicle turns in a lean state in which the leaning vehicle leans leftward or rightward with a rotation axis as a center relative to the vertical line of the road surface. The up-down direction reference line is a reference line extending in an up-down direction of the leaning vehicle.

[Yaw Rate]

A yaw rate herein refers to a rate of change in a yaw angle of the leaning vehicle when the leaning vehicle turns in a lean state. The yaw angle refers to a rotation angle when the leaning vehicle rotates around a vertical axis passing the center of gravity.

ADVANTAGEOUS EFFECTS OF INVENTION

One embodiment of the present invention provides a leaning vehicle capable of reducing a posture change of the leaning vehicle due to a gear-shift while the leaning vehicle turns in a lean state.

BRIEF DESCRIPTION OF DRAWINGS

[FIG. 1] FIG. 1 is a left side view of a vehicle according to a first embodiment.
[FIG. 2] FIG. 2 is a cross-sectional view illustrating a schematic configuration of a multi-stage automatic transmission.
[FIG. 3] FIG. 3 is a cross-sectional view illustrating a schematic configuration of a shift mechanism.

[FIG. 4] FIG. 4 is a view illustrating a vehicle that turns leftward when seen from the front.

[FIG. 5] FIG. 5 is a block diagram illustrating a schematic configuration of a controller.

[FIG. 6] FIG. 6 is a graph showing an example of gear-shift control determination data.

[FIG. 7] FIG. 7 is a chart depicting an operation flow of gear-shift control by the controller.

[FIG. 8] FIG. 8 is a graph showing a variation of the first embodiment and corresponds to FIG. 6.

[FIG. 9] FIG. 9 is a chart showing a variation of the first embodiment and corresponds to FIG. 7.

[FIG. 10] FIG. 10 shows a multi-stage automatic transmission of a vehicle according to a second embodiment and corresponds to FIG. 2.

[FIG. 11] FIG. 11 is a view schematically illustrating a configuration of the multi-stage automatic transmission.

[FIG. 12] FIG. 12 is a diagram for illustrating a relationship between a yaw rate and a centrifugal force.

[FIG. 13] FIG. 13 is a graph showing gear-shift control determination data using a vehicle speed and a yaw rate and corresponds to FIG. 6.

[FIG. 14] FIG. 14 shows examples of a left side view of a vehicle, a cross-sectional view of a multi-stage automatic transmission, and a block diagram of a controller.

DESCRIPTION OF EMBODIMENT

Embodiments of the present invention will be described hereinafter with reference to the drawings. The dimensions of components in the drawings do not strictly represent actual dimensions of the components and dimensional proportions of the components, for example.

In the following description, arrow F in the drawings represents a forward direction of a vehicle. Arrow RR in the drawings represents a rearward direction of the vehicle. Arrow U in the drawings represents an upward direction of the vehicle. Arrow R in the drawings represents a rightward direction of the vehicle. Arrow L in the drawings represents a leftward direction of the vehicle. The front, rear, left, and right directions respectively refer to the front, rear, left, and right directions when seen from a driver driving the vehicle.

[First Embodiment]

<Overall Configuration>

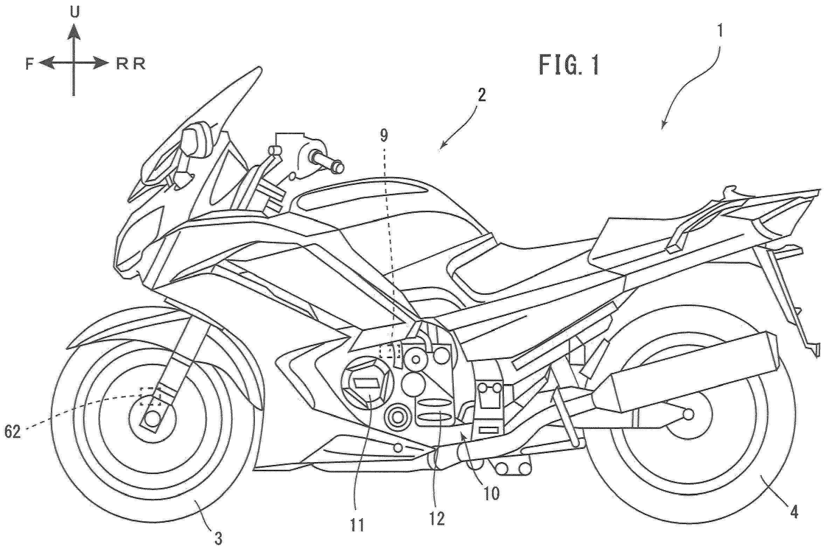

FIG. 1 illustrates a left side view of a vehicle 1 according to an embodiment of the present invention. The vehicle 1 is, for example, a motorcycle. Specifically, the vehicle 1 is a leaning vehicle that leans leftward when turning to the left and leans rightward when turning to the right.

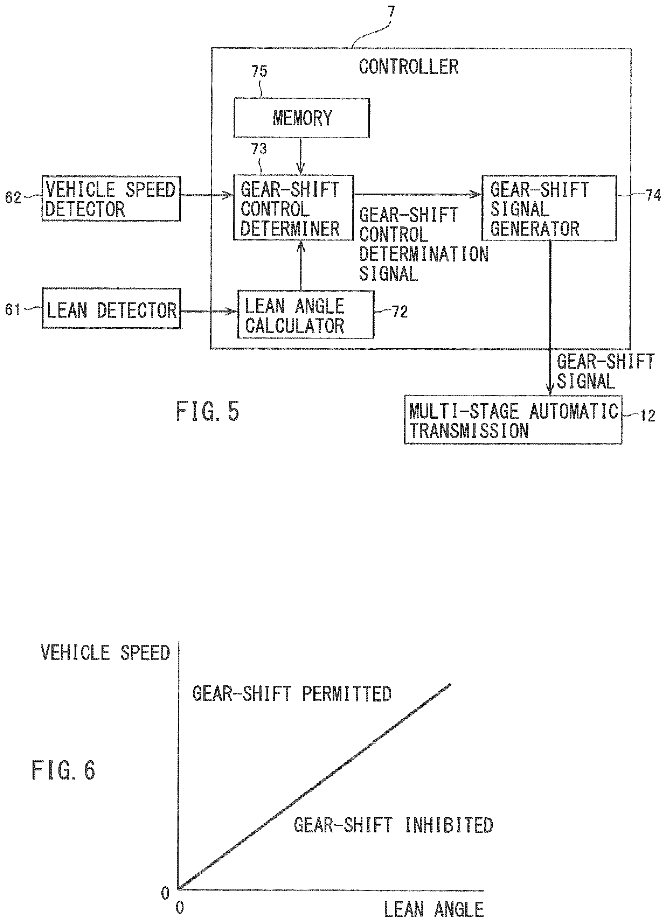

The vehicle 1 includes a vehicle body 2, a front wheel 3, a rear wheel 4, a controller 7, a lean detector 61, a vehicle speed detector 62, and an engine unit 10. The lean detector 61 is illustrated in FIG. 5.

The engine unit 10 for supplying a rotation driving force to the rear wheel 4 is attached to a frame of the vehicle body 2. The engine unit 10 includes an engine 11 as an example of a driving source, and a multi-stage automatic transmission 12 that shifts the speed of rotation output from the engine 11. The configuration of the engine unit 10 will be specifically described later.

The controller 7 for controlling driving of the engine unit 10 is disposed in the vehicle body 2. The controller 7 is a so-called electric control unit (ECU), and controls driving of other components in the vehicle 1 as well as the engine unit 10.

The lean detector 61 and the vehicle speed detector 62 are also disposed in the vehicle body 2. The lean detector 61 detects information on a leaning posture of the vehicle 1. In this embodiment, the lean detector 61 is, for example, an inertial measurement unit (IMU), and detects a lean angular velocity when the vehicle 1 leans leftward or rightward. The vehicle speed detector 62 detects a traveling speed (a vehicle speed) of the vehicle 1. The lean detector 61 may detect at least one of an angular velocity (pitch angular velocity) when the vehicle 1 rotates forth or back about a rotation axis extending in the left-right direction of the vehicle 1 or an angular velocity (yaw angular velocity) when the vehicle 1 rotates about the vertical axis when seen from above. The vehicle speed detector 62 detects a rotation speed of the front wheel 3 to thereby detect the vehicle speed of the vehicle 1, for example. The vehicle speed detector 62 may detect a rotation speed of the rear wheel 4. The vehicle speed detector 62 may include another configuration capable of detecting the vehicle speed of the vehicle 1. A engine speed detector and a throttle opening degree detector may also be disposed in the vehicle 1. The engine speed detector detects a rotation speed of the engine 11. The throttle opening degree detector detects an opening degree of a throttle valve, not shown.

<Engine Unit>

Next, a configuration of the engine unit 10 will be described.

The engine unit 10 includes the engine 11 and the multi-stage automatic transmission 12. The engine 11 has a configuration similar to that of a typical engine. Thus, the engine 11 will not be described in detail.

The multi-stage automatic transmission 12 includes a plurality of gear stages and automatically changes the gear stages stepwise to thereby change a driving force to be transferred from the engine 11 to the rear wheel 4. Specifically, the multi-stage automatic transmission 12 includes a transmission mechanism 20, a clutch 40, and a shift mechanism 50.

The term of automatically changing the gear stages stepwise refers to changing to a next gear stage having a large gear-shift ratio or a next gear stage having a small gear-shift ratio without a gear-shift operation by a driver of the vehicle 1. At this time, an instruction signal instructing changing of the gear stages may be input, or may not be input, to the multi-stage automatic transmission 12 from the driver of the vehicle 1.

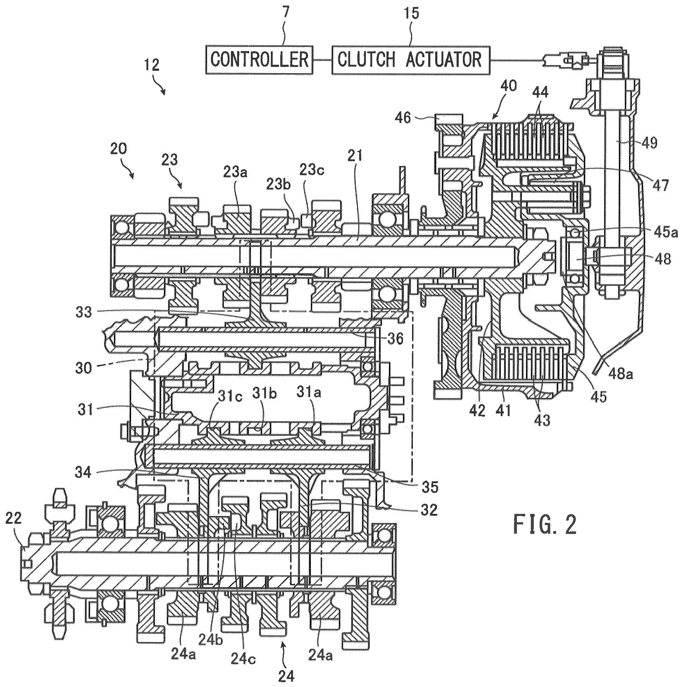

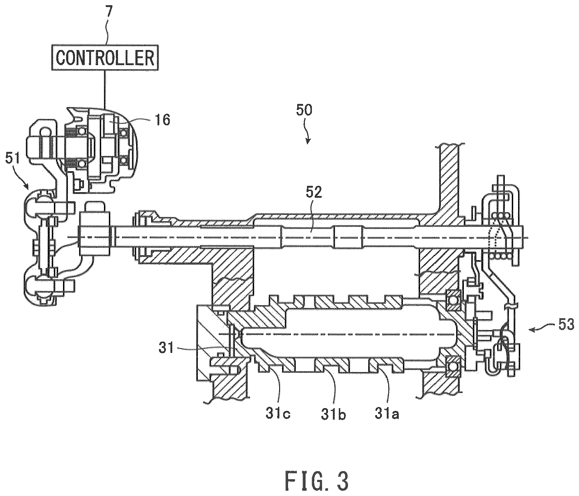

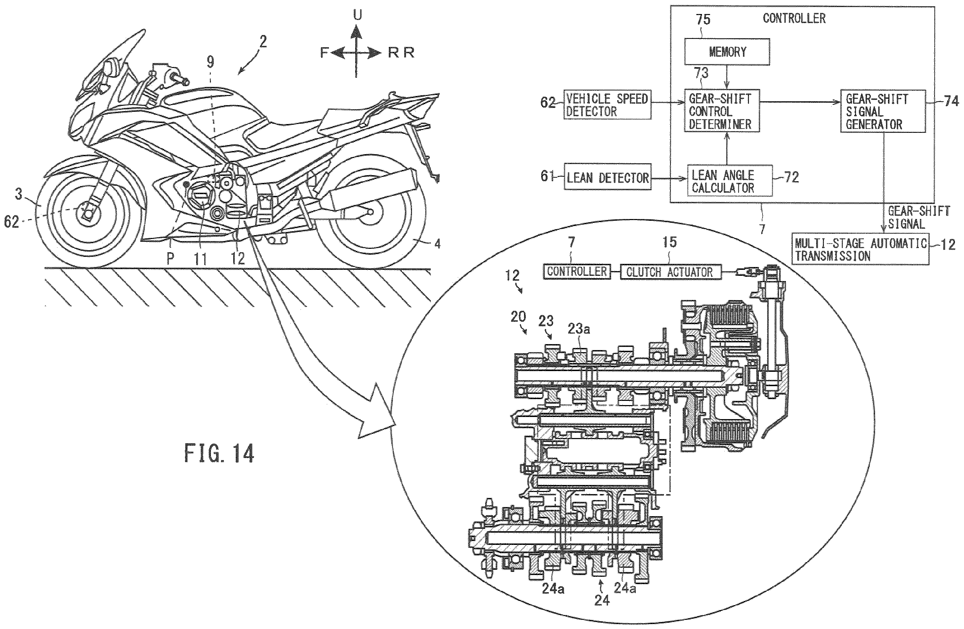

FIG. 2 illustrates schematic configurations of the transmission mechanism 20 and the clutch 40 of the multi-stage automatic transmission 12. FIG. 3 illustrates a schematic configuration of the shift mechanism 50 of the multi-stage automatic transmission 12. FIG. 14 illustrates schematic configurations of the vehicle 1 and the multi-stage automatic transmission 12. FIG. 14 also illustrates a block diagram of the controller 7 described later. Since FIG. 14 corresponds to FIGS. 1, 2, and 5, detailed description of FIG. 14 will be omitted.

The transmission mechanism 20 is connected to a crankshaft, not shown, of the engine 11. The transmission mechanism 20 changes a torque transferred from the crankshaft to a predetermined torque, and outputs the predetermined torque.

The clutch 40 is configured to transmit rotation of the crankshaft to the transmission mechanism 20. That is, the clutch 40 is configured to switch between transfer and non-transfer of rotation of the crankshaft to the transmission mechanism 20.

The shift mechanism 50 performs a gear-shift of the transmission mechanism 20 through a sequential shift mechanism 30 described later, and retains a gear stage selected by the transmission mechanism 20 until the next gear-shift is performed by the transmission mechanism 20.

As described above, a driving force is transferred to the transmission mechanism 20 of the multi-stage automatic transmission 12 from the engine 11 through the clutch 40.

With reference to FIG. 2 and FIG. 3, the configuration of the multi-stage automatic transmission 12 including the transmission mechanism 20, the clutch 40, and the shift mechanism 50 will be described in detail.

The clutch 40 is, for example, a multiplate friction clutch. The clutch 40 includes a bottomed cylindrical clutch housing 41, a bottomed cylindrical clutch boss 42, a plurality of friction plates 43 and a plurality of clutch plates 44 that are friction discs, a pressure plate 45, and an input gear 46. The clutch 40 is not limited to a multiplate clutch as described in this embodiment. The clutch 40 may be an automatic centrifugal clutch using a centrifugal weight.

The clutch housing 41 is disposed concentrically with a main shaft 21 of the transmission mechanism 20 and is rotatable relative to the main shaft 21. A bottom portion of the bottomed cylindrical clutch housing 41 is connected to the input gear 46. The input gear 46 meshes with a gear (not shown) disposed on the crankshaft of the engine 11 to thereby rotate together with the gear. The clutch housing 41 and the input gear 46 rotate together with the crankshaft, and are rotatable with respect to the main shaft 21 of the transmission mechanism 20.

The plurality of friction plates 43 as ring-shaped thin plates are arranged inside the clutch housing 41. The plurality of friction plates 43 are arranged in the thickness direction inside the clutch housing 41. The plurality of friction plates 43 are attached to the inner peripheral surface of the clutch housing 41 to be rotatable together with the clutch housing 41 and displaceable with respect to the clutch housing 41 along the axial direction of the main shaft 21.

An end portion of the main shaft 21 penetrates the bottom portion of the clutch housing 41. A bottom portion of the clutch boss 42 is fixed to a front end portion of the main shaft 21 penetrating the clutch housing 41. Accordingly, the clutch boss 42 rotates together with the main shaft 21.

The clutch boss 42 is disposed inside the clutch housing 41. The plurality of clutch plates 44 as ring-shaped thin plates are disposed on an outer peripheral portion of the clutch boss 42. That is, the plurality of clutch plates 44 are attached to the outer peripheral surface of the clutch boss 42 to be rotatable together with the clutch boss 42 and displaceable with respect to the clutch boss 42 along the axial direction of the main shaft 21.

The plurality of friction plates 43 and the plurality of clutch plates 44 are alternately arranged along the axial direction of the main shaft 21.

The pressure plate 45 is a substantially disc-shaped member. The clutch housing 41, the clutch boss 42, and the pressure plate 45 are arranged in this order with respect to the main shaft 21 along the axial direction of the main shaft 21. The pressure plate 45 is disposed outside the main shaft 21 in the axial direction to face the clutch boss 42 in the axial direction. The pressure plate 45 is displaceable with respect to the clutch boss 42 along the axial direction of the main shaft 21. The pressure plate 45 is pressed by a clutch spring 47 toward the clutch boss 42.

As described above, when the pressure plate 45 is pressed toward the clutch boss 42, each of the friction plates 43 and each of the clutch plates 44 are thereby pushed against each other in the thickness direction. That is, the plurality of friction plates 43 and the plurality of clutch plates 44 are engaged with one another. As described above, while the plurality of friction plates 43 and the plurality of clutch plates 44 are engaged, the clutch boss 42 and the clutch housing 41 rotate together by friction between the friction plates 43 and the clutch plates 44. This state is an engaged state of the clutch 40.

In this engaged state of the clutch 40, rotation is allowed to be transferred from the clutch housing 41 to the clutch boss 42, that is, from the input gear 46 to the main shaft 21, through each of the friction plates 43 and each of the clutch plates 44.

A push rod 48 penetrates a center portion of the pressure plate 45 when seen in the axial direction of the main shaft 21. The push rod 48 is disposed to extend in the axial direction of the main shaft 21. That is, the axial direction of the push rod 48 coincides with the axial direction of the main shaft 21. A flange 48a is provided on one end of the push rod 48. The other end of the push rod 48 is connected to a rod 49. The rod 49 is rotatable about the axis by a clutch actuator 15. The clutch actuator 15 is controlled to be driven based on a clutch signal output from the controller 7.

The push rod 48 is configured to be movable along the axial direction of the main shaft 21 by rotation of the rod 49. In a case where the push rod 48 moves in a direction away from the main shaft 21 (rightward in FIG. 2), the pressure plate 45 receives a force in a direction away from the clutch boss 42 in the axial direction by the flange 48a of the push rod 48. Accordingly, the clutch spring 47 is deformed to be compressed. Thus, a force with which the pressure plate 45 pushes the friction plates 43 and the clutch plates 44 decreases.

Consequently, a contact pressure between the friction plates 43 and the clutch plates 44 decreases. In this manner, the friction plates 43 and the clutch plates 44 are disengaged, and the clutch boss 42 and the clutch housing 41 rotate relative to each other. This state is a disengaged state of the clutch 40.

That is, the clutch 40 is switched between the engaged state and the disengaged state by movement of the push rod 48 along the axial direction of the main shaft 21.

The pressure plate 45 is rotatable about the push rod 48 with a bearing 45a interposed therebetween. Accordingly, while the clutch 40 is in the engaged state, the pressure plate 45 rotates together with the clutch housing 41 and the clutch boss 42.

The transmission mechanism 20 is a multistep transmission mechanism. The transmission mechanism 20 includes the main shaft 21, an output shaft 22 disposed in parallel with the main shaft 21, a plurality of driving gears 23, a plurality of driven gears 24, and the sequential shift mechanism 30. The sequential shift mechanism 30 includes a shift cam 31, shift forks 32 through 34, and guide shafts 35 and 36 for guiding movement of the shift forks 32 through 34.

The main shaft 21 is provided with the plurality of driving gears 23. The plurality of driving gears 23 are transmission gears constituting part of the plurality of gear stages. On the other hand, the output shaft 22 is provided with the plurality of driven gears 24 always meshing with the plurality of driving gears 23. The plurality of driven gears 24 are transmission gears constituting part of the plurality of gear stages. The transmission mechanism 20 is a so-called gear-type transmission mechanism in which the plurality of driving gears 23 and the plurality of driven gears 24 always mesh with each other in a one-toone relationship.

In the transmission mechanism 20, in accordance with the gear stage, the sequential shift mechanism 30 selects a combination of a driving gear 23 and a driven gear 24 for transferring a driving force among the plurality of driving gears 23 and the plurality of driven gears 24.

Specifically, a predetermined driving gear 23a in the plurality of driving gears 23 is fixed to the main shaft 21 in the rotation direction, while being movable along the axial direction of the main shaft 21. Predetermined driven gears 24a in the plurality of driven gears 24 are fixed to the output shaft 22 in the rotation direction, while being movable along the axial direction of the output shaft 22. Positions of the predetermined driving gear 23a and the predetermined driven gears 24a in the axial direction are determined by the sequential shift mechanism 30 in accordance with the gear stage.

The driving gears 23, except for the predetermined driving gear 23a in the plurality of driving gears 23, include driving gears 23 fixed to the main shaft 21 in the axial direction and rotatable with respect to the main shaft 21, and driving gears 23 fixed to the main shaft 21 in the axial direction and rotatable together with the main shaft 21. Driven gears 24, except for the predetermined driven gears 24a in the plurality of driven gears 24, are fixed to the output shaft 22 in the axial direction and rotatable with respect to the output shaft 22.

A configuration of the transmission mechanism 20 is similar to a configuration of a known transmission mechanism (e.g., JP2015-117798A), and thus, will not be described in detail.

The sequential shift mechanism 30 includes the shift cam 31 and the shift forks 32 through 34. As illustrated in FIG. 3, cam grooves 31a through 31c are formed on the outer peripheral surface of the shift cam 31 of the sequential shift mechanism 30. The cam grooves 31a through 31c are arranged along the axial direction of the shift cam 31 such that each of the cam grooves 31a through 31c extends circumferentially on the outer peripheral surface of the shift cam 31. Configurations of the cam grooves 31a through 31c of this embodiment are similar to those of known cam grooves (e.g., JP2015-117798A), and thus, will not be described in detail. The cam grooves 31a through 31c are arranged on the outer peripheral surface of the shift cam 31 such that positions of the cam grooves 31a through 31c in the axial direction of the shift cam 31 change in accordance with the positions thereof in the circumferential direction of the shift cam 31. One end of each of the shift forks 32 through 34 is located in an associated one of the cam grooves 31a through 31c.

As illustrated in FIG. 2, the shift forks 32 through 34 are disposed on the guide shafts 35 and 36 parallel to the axis of the shift cam 31 and are movable along the axial direction of the guide shafts 35 and 36. The other end of each of the shift forks 32 through 34 is connected to the predetermined driving gear 23a and the predetermined driven gears 24a. Accordingly, when the shift cam 31 rotates, the shift forks 32 through 34 move in the axial direction of the shift cam 31 along the cam grooves 31a through 31c on the outer peripheral surface of the shift cam 31. Thus, with the rotation of the shift cam 31, positions of the predetermined driving gear 23a and the predetermined driven gears 24a in the axial direction are determined through the shift forks 32 through 34.

The predetermined driving gear 23a and the driving gear 23 adjacent to the predetermined driving gear 23a in the axial direction of the main shaft 21 respectively include dogs 23b and 23c that mesh with each other. Each of the predetermined driven gears 24a and the driven gear 24 adjacent to the predetermined driven gear 24a in the axial direction of the output shaft 22 respectively include dogs 24b and 24c that mesh with each other. As described above, with rotation of the shift cam 31, when the predetermined driving gear 23a moves along the axial direction through the shift fork 33, the dog 23b of the predetermined driving gear 23a meshes with the dog 23c of the driving gear 23 adjacent to the predetermined driving gear 23a in the axial direction of the main shaft 21. With the rotation of the shift cam 31, when each of the predetermined driven gears 24a moves along the axial direction through the shift forks 32 and 34, the dog 24b of the predetermined driven gear 24a meshes with the dog 24c of the driven gear 24 adjacent to the predetermined driven gear 24a in the axial direction of the output shaft 22.

Accordingly, a combination of the driving gear 23 and the driven gear 24 for transferring a driving force from the main shaft 21 to the output shaft 22 is selected. That is, in the transmission mechanism 20, in a case where the predetermined driving gear 23a moves along the axial direction through the shift fork 33 in accordance with rotation of the shift cam 31, the driving gear 23 associated with a specific gear stage (i.e., gear stage except for the predetermined gear stage) in the plurality of driving gears 23 is fixed to the main shaft 21 by the predetermined driving gear 23a to rotate together with the main shaft 21. On the other hand, in a case where the predetermined driven gear 24a moves along the axial direction through the shift forks 32 and 34 in accordance with rotation of the shift cam 31, the driven gear 24 associated with a specific gear stage (i.e., gear stage except for the predetermined gear stage) in the plurality of driven gears 24 is fixed to the output shaft 22 by the predetermined driven gear 24a to rotate together with the output shaft 22.

In the manner described above, only the driving gear 23 and the driven gear 24 associated with the specific gear stage in the transmission mechanism 20 transfer a driving force from the main shaft 21 to the output shaft 22. Accordingly, the transmission mechanism 20 transfers a driving force output from the engine 11 from the main shaft 21 to the output shaft 22 at a predetermined gear-shift ratio in each gear stage.

The shift mechanism 50 causes the shift cam 31 of the transmission mechanism 20 to rotate in accordance with a gear-shift signal output from the controller 7. The shift mechanism 50 is driven by a shift actuator 16. The shift actuator 16 is controlled and driven based on a gear-shift signal output from the controller 7.

The shift mechanism 50 includes a shift rod 51, a shift shaft 52, and an intermittent feeder 53. A driving force of the shift actuator 16 is transferred to the shift rod 51. One end of the shift shaft 52 is connected to the shift rod 51, and the other end of the shift shaft 52 is connected to the shift cam 31 through the intermittent feeder 53. The shift actuator 16 causes the shift shaft 52 to rotate in a predetermined direction through the shift rod 51 based on a gear-shift signal output from the controller 7. This predetermined direction is switched in opposite directions between a shift-up (changing to a gear stage having a smaller gear-shift ratio) and a shift-down (changing to a gear stage having a larger gear-shift ratio).

The shift shaft 52 rotates with a driving force of the shift actuator 16 to thereby cause the shift cam 31 to rotate about the axis through the intermittent feeder 53. When the shift shaft 52 rotates in a predetermined direction, the intermittent feeder 53 causes the shift cam 31 to rotate by a certain angle in a rotation direction corresponding to the predetermined direction. A configuration of the intermittent feeder 53 is similar to a known configuration (e.g., Japanese Patent Application Publication No. 2015-117798). Thus, the configuration of the intermittent feeder 53 will not be described in detail.

With the configuration described above, when the shift actuator 16 is driven based on a gear-shift signal output from the controller 7, a driving force of the shift actuator 16 causes the shift shaft 52 to rotate in a predetermined direction through the shift rod 51. In accordance with the rotation direction of the shift shaft 52, the intermittent feeder 53 causes the shift cam 31 to rotate by a certain angle in a rotation direction corresponding to the predetermined direction.

Accordingly, in the transmission mechanism 20, the shift forks 32 through 34 move in the axial direction of the shift cam 31 along the cam grooves 31a through 31c on the shift cam 31. With such movement of the shift forks 32 through 34, the predetermined driving gear 23a and the driving gear 23 associated with the gear stage are engaged through the dogs 23b and 23c thereof, whereas one of the predetermined driven gears 24a and the driven gear 24 associated with the gear stage are engaged through the dogs 24b and 24c thereof. Consequently, a driving force can be transferred at a gear-shift ratio of each gear stage from the main shaft 21 to the output shaft 22 through the driving gear 23 and the driven gear 24 associated with the gear stage.

<Controller>

The controller 7 controls driving of components of the vehicle 1, such as the engine unit 10. The controller 7 is, for example, an electric control unit (ECU). In this embodiment, the controller 7 generates a gear-shift signal for instructing changing of gear stages, and outputs the gear-shift signal to the multi-stage automatic transmission 12. The controller 7 of this embodiment controls driving of the multi-stage automatic transmission 12 based on a vehicle speed and a lean angle of the vehicle 1. That is, the controller 7 constitutes a gear-shift controller.

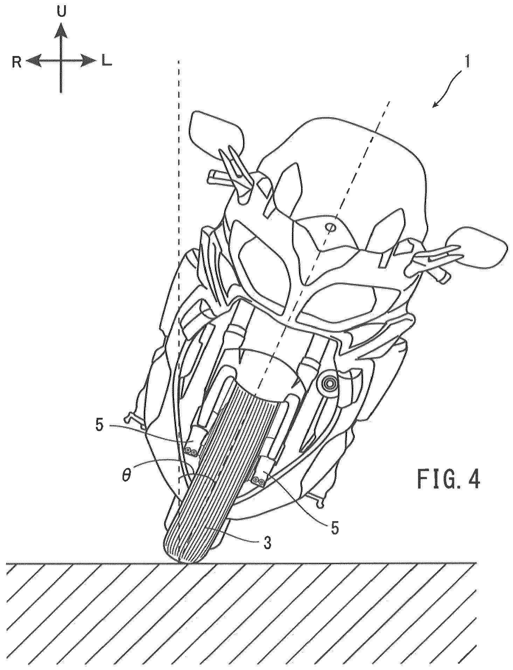

In this embodiment, the vehicle 1 leans leftward when turning to the left and leans rightward when turning to the right. FIG. 4 is a view of the vehicle 1 that turns leftward, when seen from the front. As illustrated in FIG. 4, while the vehicle 1 turns, the vehicle 1 leans at a predetermined lean angle θ with respect to a vertical axis (broken line in FIG. 4).

When the gear stage of the multi-stage automatic transmission 12 is changed with the vehicle 1 turning leftward while leaning to the left or with the vehicle 1 turning rightward while leaning to the right as described above, a driving force output from the engine unit 10 changes. Then, a force of changing the lean angle θ occurs in the vehicle 1.

For example, when the clutch 40 of the multi-stage automatic transmission 12 is disengaged, a driving force transferred from the engine unit 10 to the rear wheel 4 decreases. Thus, a centrifugal force occurring in the vehicle 1 decreases. Then, the vehicle 1 leans further to the leaning direction, so that the lean angle θ increases.

Thereafter, when the gear stage of the multi-stage automatic transmission 12 is changed and the clutch 40 is engaged, the driving force transferred from the engine unit 10 to the rear wheel 4 increases. Thus, a centrifugal force occurring in the vehicle 1 increases. Then, the vehicle 1 rises from the leaning position, so that the lean angle θ decreases. In particular, in a shift-down of the multi-stage automatic transmission 12, a driving force transferred from the engine unit 10 to the rear wheel 4 rapidly increases. Thus, a larger centrifugal force occurs in the vehicle 1, so that the lean angle θ of the vehicle 1 further decreases.

When the lean angle θ changes as described above, the posture of the vehicle 1 in turning changes. Accordingly, a behavior of the vehicle 1 in turning changes.

Likewise, the posture of the vehicle 1 in turning changes when there is a change in a physical quantity associated with a radius of turn, i.e., a change in at least one of a vehicle speed and a physical quantity associated with a lean angle of the vehicle 1, a yaw rate of the vehicle 1, or a radius of curvature of a corner that the vehicle 1 turns in a lean state. Accordingly, the behavior of the vehicle 1 in turning changes.

The controller 7 of this embodiment, therefore, inhibits changing of the gear stages in the multi-stage automatic transmission 12 based on the physical quantity associated with the radius of turn of the corner that the leaning vehicle turns in the lean state.

FIG. 5 is a block diagram illustrating a schematic configuration of the controller 7. The controller 7 includes a lean angle calculator 72, a gear-shift control determiner 73, a gear-shift signal generator 74, and a memory 75.

The lean angle calculator 72 calculates a lean angle from a lean angular velocity of the vehicle 1 detected by the lean detector 61.

The gear-shift control determiner 73 determines whether to change the gear stages in the multi-stage automatic transmission 12 or not from gear-shift control determination data previously stored in the memory 75, by using the lean angle of the vehicle 1 calculated by the lean angle calculator 72 and a vehicle speed of the vehicle 1 detected by the vehicle speed detector 62.

The gear-shift control determination data is data for determining whether changing of the gear stages in the multi-stage automatic transmission 12 is to be permitted or inhibited. That is, the gear-shift control determination data is data for determining whether the lean angle of the vehicle 1 changes or not in the case of changing the gear stages in the multi-stage automatic transmission 12. Based on the gear-shift control determination data, the gear-shift control determiner 73 inhibits changing of the gear stages or permits changing of the gear stages on a basis of the physical quantity associated with a radius of turn of a corner that the vehicle 1 turns by a changing of the gear stages in the multi-stage automatic transmission 12.

More specifically, the gear-shift control determination data includes information on a range where changing of the gear stages in the multi-stage automatic transmission 12 is permitted and information on a range where changing of the gear stages is inhibited, in the relationship between the lean angle and the vehicle speed of the vehicle 1 that are the physical quantity associated with a radius of turn.

In this embodiment, as illustrated in the example in FIG. 6, the gear-shift control determination data includes data on a threshold between a range where changing of the gear stages in the multi-stage automatic transmission 12 is permitted (i.e., a range of "gear-shift permitted" in FIG. 6) and a range where the changing of the gear stages is inhibited (i.e., a range of "gear-shift inhibited" in FIG. 6) on the graph whose abscissa represents the lean angle of the vehicle 1 and the ordinate represents a vehicle speed.

In the gear-shift control determination data, as the lean angle of the vehicle 1 increases, the threshold of a vehicle speed for inhibiting changing of the gear stages increases. While the vehicle 1 turns in the lean state, the influence of changing of the gear stages in the multi-stage automatic transmission 12 with respect to the lean angle of the vehicle 1 varies in accordance with the lean angle and the vehicle speed of the vehicle 1. As in the configuration described above, changing of the threshold of the vehicle speed for inhibiting changing of the gear stages in accordance with the lean angle of the vehicle 1 further ensures suppression of a change in the lean angle occurring in the vehicle 1 due to changing of the gear stages in the multi-stage automatic transmission while the vehicle 1 turns in the lean state.

The vehicle speed and the lean angle are related to a posture of the vehicle 1. Thus, when the threshold of the vehicle speed is changed in accordance with the lean angle as described above, the range where the posture change of the vehicle 1 is permitted varies. That is, by changing the threshold of the vehicle speed as described above, the range of the posture change where changing of the gear stages in the multi-stage automatic transmission 12 is inhibited is changed in accordance with the lean angle.

The gear-shift control determiner 73 determines whether to change the gear stages in the multi-stage automatic transmission 12 from a lean angle of the vehicle 1 calculated by the lean angle calculator 72 and a vehicle speed of the vehicle 1 detected by the vehicle speed detector 62 by using the gear-shift control determination data as described above, and outputs a result of the determination as a gear-shift control determination signal.

If the gear-shift control determination signal output from the gear-shift control determiner 73 is a signal for permitting changing of the gear stages in the multi-stage automatic transmission 12, the gear-shift signal generator 74 generates a gear-shift signal in accordance with the vehicle speed, the engine speed, and the throttle opening degree of the vehicle 1. The generation of the gear-shift signal by the gear-shift signal generator 74 is similar to a general gear-shift control, and thus, will not be described in detail. The gear-shift signal generated by the gear-shift signal generator 74 is output to the multi-stage automatic transmission 12. In the multi-stage automatic transmission 12, driving of the clutch actuator 15 and the shift actuator 16 is controlled based on the gear-shift signal.

If the gear-shift control determination signal output from the gear-shift control determiner 73 is a signal for inhibiting changing of the gear stages in the multi-stage automatic transmission 12, the gear-shift signal generator 74 does not generate a gear-shift signal.

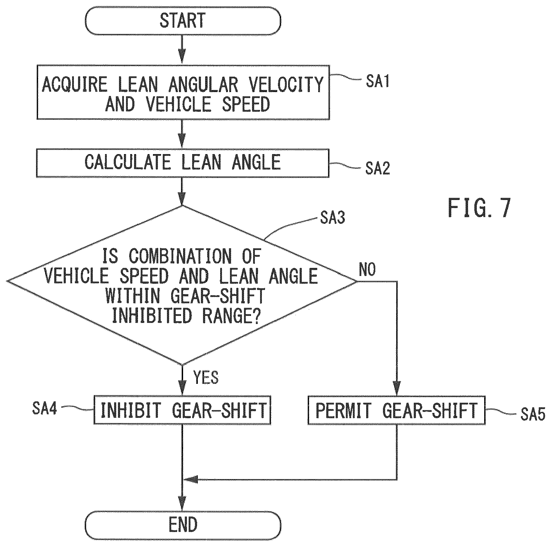

Next, gear-shift control by the controller 7 having the configuration as described above will be described. FIG. 7 depicts an operation flow of gear-shift control by the controller 7.

When the flow depicted in FIG. 7 starts, the controller 7 first acquires a lean angular velocity of the vehicle 1 detected by the lean detector 61, and data of a vehicle speed of the vehicle 1 detected by the vehicle speed detector 62 (step SA1).

Subsequently, the lean angle calculator 72 of the controller 7 calculates a lean angle of the vehicle 1 by using the acquired lean angular velocity (step SA2).

Thereafter, the gear-shift control determiner 73 of the controller 7 determines whether to change the gear stages in the multi-stage automatic transmission 12 from the gear-shift control determination data stored in the memory 75, by using the vehicle speed and the lean angle (step SA3).

The gear-shift control determination data is data for determining whether changing of the gear stages in the multi-stage automatic transmission 12 is to be permitted or inhibited. That is, the gear-shift control determination data is data for determining whether the lean angle of the vehicle 1 changes or not in the case of changing the gear stages in the multi-stage automatic transmission 12.

Based on the vehicle speed and the lean angle that are the physical quantity associated with a radius of turn, the gear-shift control determiner 73 determines whether the lean angle of the vehicle 1 changes or not in the case of changing the gear stages in the multi-stage automatic transmission 12, and inhibits a gear-shift of the multi-stage automatic transmission 12 or permits a gear-shift of the multi-stage automatic transmission 12.

In this embodiment, the gear-shift control determiner 73 determines whether a combination of the vehicle speed and the lean angle in the gear-shift control determination data is within the gear-shift inhibited range where a gear-shift of the multi-stage automatic transmission 12 is inhibited or within the gear-shift permitted range where a gear-shift of the multi-stage automatic transmission 12 is permitted.

In step SA3, if the combination of the vehicle speed and the lean angle is within the gear-shift inhibited range where a gear-shift of the multi-stage automatic transmission 12 is inhibited (YES), the process proceeds to step SA4, and a gear-shift of the multi-stage automatic transmission 12 is inhibited. At this time, the gear-shift control determiner 73 generates a gear-shift control determination signal for inhibiting a gear-shift of the multi-stage automatic transmission 12 and outputs the signal.

On the other hand, if it is determined that the combination of the vehicle speed and the lean angle is not within the gear-shift inhibited range where a gear-shift of the multi-stage automatic transmission 12 is inhibited (NO), that is, if it is determined that the combination is within the gear-shift permitted range where a gear-shift of the multi-stage automatic transmission 12 is permitted, the process proceeds to step SA5, and a gear-shift of the multi-stage automatic transmission 12 is permitted. In step SA5, the gear-shift control determiner 73 generates a gear-shift control determination signal for permitting a gear-shift of the multi-stage automatic transmission 12, and outputs the signal.

After the processes in steps SA4 and SA5, this flow is finished.

As described above, the controller 7 inhibits changing of the gear stages in the multi-stage automatic transmission 12 based on the vehicle speed and the physical quantity associated with the lean angle of the vehicle 1 while the vehicle 1 turns in the lean state.

Accordingly, while the vehicle 1 turns in the lean state, it is possible to reduce a posture change of the vehicle 1.

(Variation of First Embodiment)

In the first embodiment, the controller 7 inhibits changing of the gear stages based on the physical quantity associated with a radius of turn.

Alternatively, the controller 7 may suppress the change of the driving force by a changing of the gear stages based on the physical quantity associated with a radius of turn. That is, the controller 7 may permit changing of the gear stages in the multi-stage automatic transmission 12 so as to suppress a change of the driving force. For example, the controller 7 may permit changing of the gear stages in the multi-stage automatic transmission 12 such that a change of the lean angle of the vehicle 1 is less than or equal to a predetermined value with which the change of the lean angle of the vehicle 1 does not affect traveling of the vehicle 1.

Specifically, the controller 7 may reduce a speed in disengaging the clutch 40 (disengaging speed) as compared to that in a normal gear-shift, in changing the gear stages in the multi-stage automatic transmission 12. The controller 7 may also reduce the speed in engaging the disengaged clutch 40 as compared to that in the normal gear-shift, in changing the gear stages in the multi-stage automatic transmission 12. Accordingly, it is possible to prevent a rapid change of a driving force in changing the gear stages in the multi-stage automatic transmission 12. The normal gear-shift refers to a gear-shift performed at a gear-shift timing determined based on the vehicle speed and the throttle opening degree in a case where the lean angle is not changing.

The controller 7 may disengage the clutch of the multi-stage automatic transmission 12 after having reduced a driving force by reducing an output of the engine 11, in changing the gear stages in the multi-stage automatic transmission 12. Accordingly, it is possible to prevent a rapid change of a driving force in changing the gear stages in the multi-stage automatic transmission 12.

The control of the controller 7 as described above can reduce a posture change that occurs in the vehicle 1 while the vehicle 1 turns in the lean state.

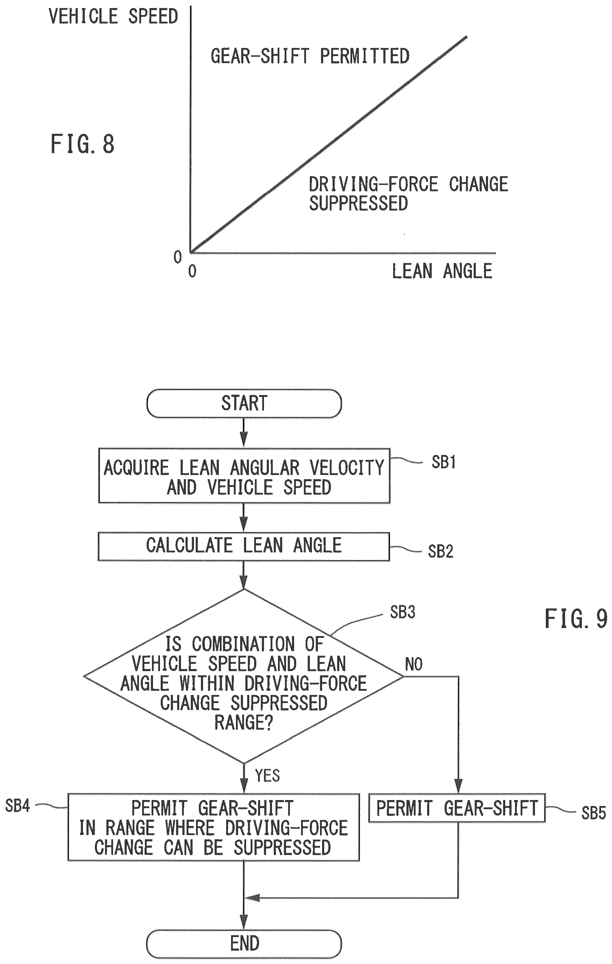

FIG. 8 shows the gear-shift permitted range where a gear-shift of the multi-stage automatic transmission 12 is permitted and a driving-force change suppressed range where a gear-shift is performed with a change of a driving force suppressed, in a relationship between a lean angle and a vehicle speed of the vehicle 1. FIG. 9 depicts a flow of gear-shift control of the controller 7 according to this variation. In FIG. 9 steps SB1 and SB2 are the same as steps SA1 and SA2 of the first embodiment, and will not be described in detail.

As shown in FIG. 8, in this variation, the gear-shift control determination data is data for determining permission of changing of the gear stages and permission of only changing of the gear stages for which a change of a driving force can be suppressed, in the multi-stage automatic transmission 12.

In the gear-shift control determination data, as the lean angle increases, the threshold of a vehicle speed that permits only changing of the gear stages capable of suppressing a change of the driving force increases. While the vehicle turns in the lean state, influence of changing of the gear stages in the multi-stage automatic transmission 12 with respect to the lean angle of the vehicle varies in accordance with the lean angle and the vehicle speed of the vehicle. Therefore, as in the configuration described above, the threshold of the vehicle speed that permits only changing of the gear stages capable of suppressing a change of the driving force is changed in accordance with the lean angle of the vehicle. Accordingly, while the vehicle turns in the lean state, a change of the lean angle of the vehicle can be more reliably suppressed.

The vehicle speed and the lean angle are related to a posture of the vehicle 1. Thus, by changing the threshold of the vehicle speed in accordance with the lean angle as described above, the range where a posture change of the vehicle 1 is permitted varies. That is, by changing the threshold of the vehicle speed as described above, the range of a posture change in which changing of the gear stages in the multi-stage automatic transmission 12 is inhibited is changed in accordance with the lean angle.

The controller 7 determines permission of changing of the gear stages and permission of changing of the gear stages capable of suppressing a change of a driving force from the gear-shift control determination data, by using the lean angle of the vehicle 1 calculated by the lean angle calculator 72 and the vehicle speed of the vehicle 1 detected by the vehicle speed detector 62. The controller 7 generates a gear-shift signal in accordance with the determination results.

Specifically, as shown in the flow of FIG. 9, in step SB3, the controller 7 determines whether or not a combination of the vehicle speed of the vehicle 1 and the lean angle obtained in step SB2 is within the driving-force change suppressed range in FIG. 8.

If it is determined that the combination of the vehicle speed and the lean angle is within the driving-force change suppressed range (YES in step SB3), the process proceeds to step SB4, and the controller 7 performs changing of the gear stages in the multi-stage automatic transmission 12 in a range where a change of a driving force can be suppressed. On the other hand, if it is determined that the combination of the vehicle speed and the lean angle is not within the driving-force change suppressed range (NO in step SB3), the process proceeds to step SB5, and the controller 7 performs changing of the gear stages in the multi-stage automatic transmission 12.

The configuration described above can suppress a change of the lean angle of the vehicle 1 by changing of the gear stages in the multi-stage automatic transmission 12, while the vehicle 1 turns in the lean state.

The controller 7 may switch between inhibition of changing of the gear stages as described in the first embodiment and suppression of a change of a driving force by changing the gear stages as described above, in accordance with the vehicle state. The vehicle state refers to information regarding a state of the vehicle 1 while the vehicle 1 turns in a lean state, that is, a posture of the vehicle 1, a vehicle speed of the vehicle 1, a radius of turn s of a corner that the vehicle 1 turns in a lean state, and a driving force, for example. Specifically, the vehicle state includes, for example, an inclination angle while the vehicle 1 turns in a lean state, a vehicle speed when the vehicle 1 turns, a physical quantity associated with a radius of turn of a corner that the vehicle 1 turns in a lean state, and a physical quantity associated with a driving force transferred to wheels from a driving source of the vehicle 1 through the multi-stage automatic transmission. The physical quantity associated with a radius of turn includes at least one of a vehicle speed and a physical quantity associated with a lean angle of the vehicle 1, a speed and a yaw rate of the vehicle 1, or a radius of curvature of a corner that the vehicle 1 turns in a lean state, in a state where the vehicle 1 turns in the lean state.

(Second Embodiment)

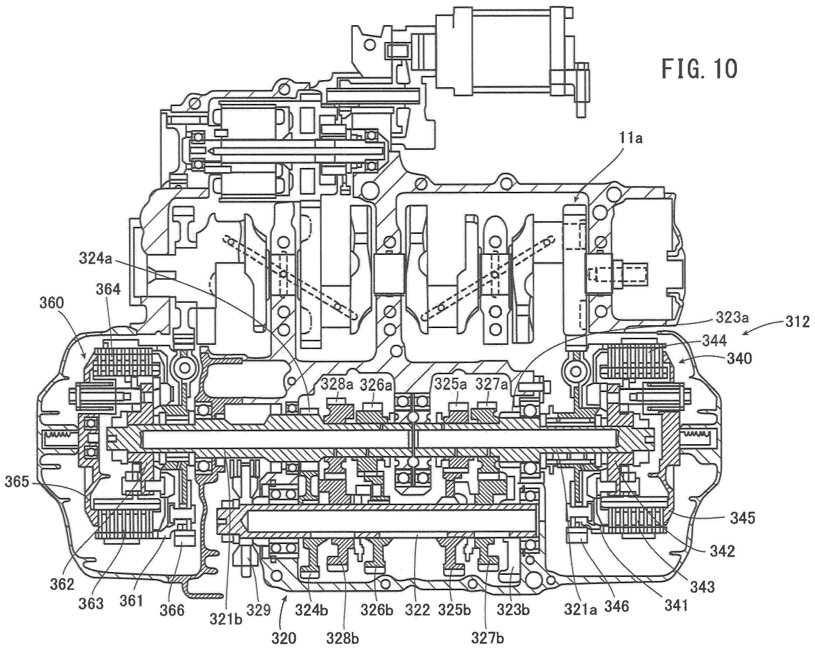

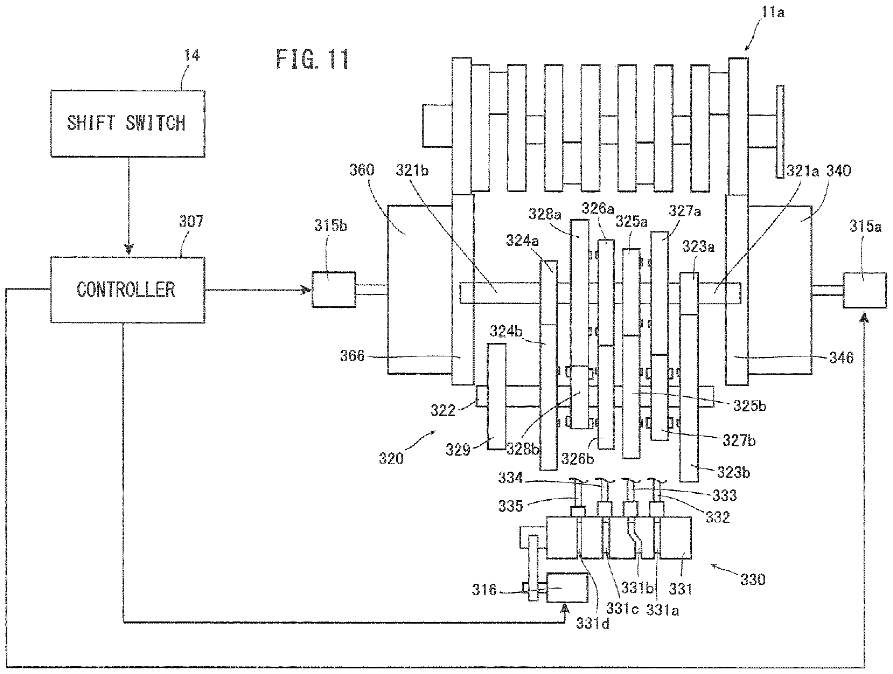

FIG. 10 illustrates a schematic configuration of a multi-stage automatic transmission 312 of a vehicle according to a second embodiment. For explanation, FIG. 11 schematically illustrates the configuration of the multi-stage automatic transmission 312. The multi-stage automatic transmission 312 of this embodiment is different from the configuration of the first embodiment in including two clutches of a first clutch 340 and a second clutch 360. In the following description, components similar to those of the first embodiment are denoted by the same reference characters and will not be described again, and only components different from those of the first embodiment will be described.

The multi-stage automatic transmission 312 includes a plurality of friction driving clutches, and achieves a smooth gear-shift by alternately performing power transfer in odd-number stages and in even-number stages out of the gear stages with the first clutch 340 and the second clutch 360. The multi-stage automatic transmission 312 includes a transmission mechanism 320, the first clutch 340, the second clutch 360, and a shift mechanism.

The transmission mechanism 320 is connected to a crankshaft 11a of an engine 11. The transmission mechanism 320 changes a torque transferred from the crankshaft 11a to a predetermined torque, and outputs the predetermined torque.

The first clutch 340 and the second clutch 360 are configured to transfer rotation of the crankshaft 11a to the transmission mechanism 320. That is, the first clutch 340 and the second clutch 360 are configured to switch between transfer and non-transfer of rotation of the crankshaft 11a to the transmission mechanism 320.

The first clutch 340 is driven by a first clutch actuator 315a described later. The first clutch 340 transfers a driving force at odd-number stages (i.e., first-speed stage, third-speed stage, and fifth-speed stage) of the transmission mechanism 320.

The second clutch 360 is driven by a second clutch actuator 315b described later. The second clutch 360 transfers a driving force at even-number stages (i.e., second-speed stage, fourth-speed stage, and six-speed stage) of the transmission mechanism 320.

The shift mechanism performs a gear-shift of the transmission mechanism 320 through a sequential shift mechanism 330 described later, and retains a gear stage selected by the transmission mechanism 320 until the next gear-shift is performed by the transmission mechanism 320. A configuration of the shift mechanism is similar to the configuration of the shift mechanism 50 of the first embodiment, and thus, will not be described in detail.

As described above, a driving force is transferred to the transmission mechanism 320 of the multi-stage automatic transmission 312 from the engine 11 through the first clutch 340 or the second clutch 360.

A configuration of the multi-stage automatic transmission 312 including the transmission mechanism 320, the first clutch 340, the second clutch 360, and the shift mechanism will now be described in detail.

Each of the first clutch 340 and the second clutch 360 is, for example, a multiplate friction clutch. The first clutch 340 includes a bottomed cylindrical clutch housing 341, a bottomed cylindrical clutch boss 342, a plurality of friction plates 343 and clutch plates 344 that are friction discs, a pressure plate 345, and an input gear 346. The second clutch 360 includes a bottomed cylindrical clutch housing 361, a bottomed cylindrical clutch boss 362, a plurality of friction plates 363 and clutch plates 364 that are friction discs, a pressure plate 365, and an input gear 366.

The first clutch 340 and the second clutch 360 have the same configuration. The configurations of the first clutch 340 and the second clutch 360 are similar to the configuration of the clutch 40 in the first embodiment. Thus, the configurations of the first clutch 340 and the second clutch 360 will not be described in detail.

The clutch boss 342 of the first clutch 340 is coupled to an end portion of a first main shaft 321a described later in the transmission mechanism 320. The clutch housing 341 of the first clutch 340 is connected to the input gear 346 that meshes with a gear provided on the crankshaft 11a. The plurality of friction plates 343 are attached to the inner peripheral surface of the clutch housing 341. The plurality of clutch plates 344 are attached to the outer peripheral surface of the clutch boss 342. The friction plates 343 and the clutch plates 344 are engaged or disengaged to thereby enable the first clutch 340 to switch between transfer and non-transfer of rotation of the crankshaft 11a to the first main shaft 321a of the transmission mechanism 320.

The clutch boss 362 of the second clutch 360 is coupled to an end portion of a second main shaft 321b described later in the transmission mechanism 320. The clutch housing 361 of the second clutch 360 is connected to the input gear 366 that meshes with a gear provided on the crankshaft 11a. The plurality of friction plates 363 are attached to the inner peripheral surface of the clutch housing 361. The plurality of clutch plates 364 are attached to the outer peripheral surface of the clutch boss 362. The friction plates 363 and the clutch plates 364 are engaged or disengaged to thereby enable the second clutch 360 to switch between transfer and non-transfer of rotation of the crankshaft 11a to the second main shaft 321b of the transmission mechanism 320.

Engagement and disengagement between the friction plates 343 and the clutch plates 344 in the first clutch 340 are performed by driving the first clutch actuator 315a as illustrated in FIG. 11. Engagement and disengagement between the friction plates 363 and the clutch plates 364 in the second clutch 360 are performed by driving the second clutch actuator 315b as illustrated in FIG. 11.

The transmission mechanism 320 is a multistep transmission mechanism. The transmission mechanism 320 includes the first main shaft 321a, the second main shaft 321b, the output shaft 322, a plurality of driving gears, a plurality of driven gears, and the sequential shift mechanism 330 (see FIG. 11).

The first main shaft 321a and the second main shaft 321b are disposed on the same axis such that one end of the first main shaft 321a faces one end of the second main shaft 321b. The first main shaft 321a and the second main shaft 321b are rotatable independently of each other. The other end of the first main shaft 321a is coupled to the clutch boss 342 of the first clutch 340. The other end of the second main shaft 321b is coupled to the clutch boss 362 of the second clutch 360.

The first main shaft 321a is provided with, as part of the plurality of driving gears, a first-speed fixing gear 323a, a first spline gear 325a, and a fifth-speed gear 327a constituting each of odd-number stages including a first-speed gear, a third-speed gear, and a fifth-speed gear. The first-speed fixing gear 323a, the first spline gear 325a, and the fifth-speed gear 327a are arranged on the first main shaft 321a in the order of the first-speed fixing gear 323a, the fifth-speed gear 327a, and the first spline gear 325a from an end portion to which the first clutch 340 is connected.

The first-speed fixing gear 323a is fixed to the first main shaft 321a, and rotates together with the first main shaft 321a. The first-speed fixing gear 323a meshes with a first-speed gear 323b described later disposed on the output shaft 322.

The fifth-speed gear 327a is rotatably attached on the first main shaft 321a with movement in the axial direction of the first main shaft 321a restricted. The fifth-speed gear 327a meshes with a third spline gear 327b described later of the output shaft 322.

The first spline gear 325a is attached on the first main shaft 321a to be rotatable together with the first main shaft 321a and movable along the axial direction of the first main shaft 321a. The first spline gear 325a meshes with a third-speed gear 325b of the output shaft 322.

The first spline gear 325a is connected to a shift fork 333 described later of the sequential shift mechanism 330, and moves in the axial direction on the first main shaft 321a by movement of the shift fork 333. The first spline gear 325a moves on the first main shaft 321a as described above to be thereby connected to the fifth-speed gear 327a. Accordingly, the fifth-speed gear 327a can rotate together with the first main shaft 321a.

The second main shaft 321b is provided with, as part of the plurality of driving gears, a second-speed fixing gear 324a, a second spline gear 326a, and a sixth-speed gear 328a constituting each of even-number stages including a second-speed gear, a fourth-speed gear, and a sixth-speed gear. The second-speed fixing gear 324a, the second spline gear 326a, and the sixth-speed gear 328a are arranged on the second main shaft 321b in the order of the second-speed fixing gear 324a, the sixth-speed gear 328a, and the second spline gear 326a from an end portion to which the second clutch 360 is connected.

The second-speed fixing gear 324a is fixed to the second main shaft 321b, and rotates together with the second main shaft 321b. The second-speed fixing gear 324a meshes with a second-speed gear 324b described later disposed on the output shaft 322.

The sixth-speed gear 328a is rotatably attached on the second main shaft 321b with movement in the axial direction of the second main shaft 321b restricted. The sixth-speed gear 328a meshes with a fourth spline gear 328b described later of the output shaft 322.

The second spline gear 326a is attached on the second main shaft 321b to be rotatable together with the second main shaft 321b and movable along the axial direction of the second main shaft 321b. The second spline gear 326a meshes with a fourth-speed gear 326b of the output shaft 322.

The second spline gear 326a is connected to a shift fork 334 described later of the sequential shift mechanism 330, and moves in the axial direction on the second main shaft 321b by movement of the shift fork 334. The second spline gear 326a moves on the second main shaft 321b as described above to be thereby connected to the sixth-speed gear 328a. Accordingly, the sixth-speed gear 328a can rotate together with the second main shaft 321b.

The output shaft 322 is provided with the first-speed gear 323b, the third spline gear 327b, the third-speed gear 325b, the fourth-speed gear 326b, the fourth spline gear 328b, the second-speed gear 324b, and a sprocket 329 in this order from a side close to the first clutch 340. The first-speed gear 323b, the third-speed gear 325b, the fourth-speed gear 326b, and the second-speed gear 324b are provided on the output shaft 322 to be rotatable with respect to the output shaft 322 with movement along the axial direction of the output shaft 322 restricted.

The third spline gear 327b and the fourth spline gear 328b are attached on the output shaft 322 to rotate together with the output shaft 322 and to be movable along the axial direction of the output shaft 322. The third spline gear 327b meshes with the fifth-speed gear 327a of the first main shaft 321a. The fourth spline gear 328b meshes with the sixth-speed gear 328a of the second main shaft 321b.

The third spline gear 327b is connected to a shift fork 332 described later of the sequential shift mechanism 330, and is caused to move on the output shaft 322 along the axial direction by movement of the shift fork 332. With this movement on the output shaft 322, the third spline gear 327b is connected to the first-speed gear 323b or the third-speed gear 325b. Accordingly, the first-speed gear 323b or the third-speed gear 325b is allowed to rotate together with the output shaft 322.

The fourth spline gear 328b is connected to a shift fork 335 described later of the sequential shift mechanism 330, and is caused to move on the output shaft 322 along the axial direction by movement of the shift fork 335. With this movement on the output shaft 322, the fourth spline gear 328b is connected to the second-speed gear 324b or the fourth-speed gear 326b. Accordingly, the second-speed gear 324b or the fourth-speed gear 326b is allowed to rotate together with the output shaft 322.

The sprocket 329 rotates together with the output shaft 322. A chain, not shown, is attached to the sprocket 329. That is, rotation of the output shaft 322 is output through the sprocket 329 and the chain.

The first spline gear 325a, the second spline gear 326a, the third spline gear 327b, and the fourth spline gear 328b function as transmission gears, and also function as dog selectors. The first spline gear 325a, the second spline gear 326a, the third spline gear 327b, and the fourth spline gear 328b move along the axial direction on the first main shaft 321a, the second main shaft 321b, or the output shaft 322 to be thereby connected to the transmission gears adjacent to these gears in the axial direction by a dog mechanism, not shown. The dog mechanism is similar to a configuration of a known dog mechanism (e.g., Japanese Patent Application Publication No. 2010-133555), and thus, will not be described in detail.

For example, in a case where the gear stage of the transmission mechanism 320 is a first speed, the first spline gear 325a on the first main shaft 321a meshes with the third-speed gear 325b on the output shaft 322. The third spline gear 327b on the output shaft 322 is connected to the first-speed gear 323b. Accordingly, the first-speed gear 323b is fixed to the output shaft 322 through the third spline gear 327b to be rotatable together with the output shaft 322. Thus, rotation is transferred from the first main shaft 321a to the output shaft 322 through the first-speed gear 323b meshing with the first-speed fixing gear 323a fixed to the first main shaft 321a. At this time, the third-speed gear 325b meshing with the first spline gear 325a on the first main shaft 321a rotates with respect to the output shaft 322.

In a case where the gear stage of the transmission mechanism 320 is a second speed, the second spline gear 326a on the second main shaft 321b meshes with the fourth-speed gear 326b on the output shaft 322.

The fourth spline gear 328b on the output shaft 322 is connected to the second-speed gear 324b. Accordingly, the second-speed gear 324b is fixed to the output shaft 322 through the fourth spline gear 328b to be rotatable together with the output shaft 322. Thus, rotation is transferred from the second main shaft 321b to the output shaft 322 through the second-speed gear 324b meshing with the second-speed fixing gear 324a fixed to the second main shaft 321b. At this time, the fourth-speed gear 326b meshing with the second spline gear 326a on the second main shaft 321b rotates with respect to the output shaft 322.

In a case where the gear stage of the transmission mechanism 320 is a third speed, the first spline gear 325a on the first main shaft 321a meshes with the third-speed gear 325b on the output shaft 322. The third spline gear 327b on the output shaft 322 is connected to the third-speed gear 325b. Accordingly, the third-speed gear 325b is fixed to the output shaft 322 through the third spline gear 327b to be rotatable together with the output shaft 322. Thus, rotation is transferred from the first main shaft 321a to the output shaft 322 through the third-speed gear 325b meshing with the first spline gear 325a that rotates together with the first main shaft 321a.

In a case where the gear stage of the transmission mechanism 320 is a fourth speed, the second spline gear 326a on the second main shaft 321b meshes with the fourth-speed gear 326b on the output shaft 322. The fourth spline gear 328b on the output shaft 322 is connected to the fourth-speed gear 326b. Accordingly, the fourth-speed gear 326b is fixed to the output shaft 322 through the fourth spline gear 328b to be rotatable together with the output shaft 322. Thus, rotation is transferred from the second main shaft 321b to the output shaft 322 through the fourth-speed gear 326b meshing with the second spline gear 326a that rotates together with the second main shaft 321b.

In a case where the gear stage of the transmission mechanism 320 is a fifth speed, the first spline gear 325a on the first main shaft 321a is connected to the fifth-speed gear 327a. Accordingly, the fifth-speed gear 327a is fixed to the first main shaft 321a through the first spline gear 325a to be rotatable together with the first main shaft 321a. The third spline gear 327b on the output shaft 322 meshes with the fifth-speed gear 327a on the first main shaft 321a at a position at which the third spline gear 327b is connected to none of the first-speed gear 323b and the third-speed gear 325b. Thus, rotation is transferred from the first main shaft 321a to the output shaft 322 through the fifth-speed gear 327a connected to the first spline gear 325a that rotates together with the first main shaft 321a and through the third spline gear 327b on the output shaft 322.

In a case where the gear stage of the transmission mechanism 320 is a sixth speed, the second spline gear 326a on the second main shaft 321b is connected to the sixth-speed gear 328a. Accordingly, the sixth-speed gear 328a is fixed to the second main shaft 321b through the second spline gear 326a to be rotatable together with the second main shaft 321b. The fourth spline gear 328b on the output shaft 322 meshes with the sixth-speed gear 328a on the second main shaft 321b at a position at which the fourth spline gear 328b is connected to none of the second-speed gear 324b and the fourth-speed gear 326b. Thus, rotation is transferred from the second main shaft 321b to the output shaft 322 through the sixth-speed gear 328a connected to the second spline gear 326a that rotates together with the second main shaft 321b and through the fourth spline gear 328b on the output shaft 322.

The sequential shift mechanism 330 includes a shift cam 331 and the shift forks 332 through 335. As illustrated in FIG. 11, cam grooves 331a through 331d are formed on the outer peripheral surface of the shift cam 331 of the sequential shift mechanism 330. The cam grooves 331a through 331d are arranged along the axial direction of the shift cam 331 and each extend circumferentially on the outer peripheral surface of the shift cam 331. Configurations of the cam grooves 331a through 331d of this embodiment are similar to those of known cam grooves (e.g., Japanese Patent Application Publication No. 2010-133555), and thus, will not be described in detail. Each of the cam grooves 331a through 331d is disposed on the outer peripheral surface of the shift cam 331 such that the position in the axial direction of the shift cam 331 changes in accordance with the position in the circumferential direction of the shift cam 331. One end of each of the shift forks 332 through 335 is located on an associated one of the cam grooves 331a through 331d.

The other end of the shift fork 332 is connected to the third spline gear 327b. The other end of the shift fork 333 is connected to the first spline gear 325a. The other end of the shift fork 334 is connected to the second spline gear 326a. The other end of the shift fork 335 is connected to the fourth spline gear 328b. Accordingly, when the shift forks 332 through 335 move in the axial direction along the cam grooves 331a through 331d of the shift cam 331, the first spline gear 325a, the second spline gear 326a, the third spline gear 327b, and the fourth spline gear 328b also move in the axial direction. A driving force in a rotation direction is applied to the shift cam 331 by a shift actuator 316.

As described above, with the movement of the first spline gear 325a, the second spline gear 326a, the third spline gear 327b, and the fourth spline gear 328b in accordance with the movement of the shift forks 332 through 335, changing to each gear stage is performed in the transmission mechanism 320 as described above.

In the multi-stage automatic transmission 312 having the configuration described above, in changing the gear stages in response to an operation of a shift switch 14 by a driver, the shift actuator 316, the first clutch actuator 315a and the second clutch actuator 315b are controlled and driven by the controller 307. That is, the controller 307 outputs control signals to the shift actuator 316, the first clutch actuator 315a, and the second clutch actuator 315b.

The controller 307 disengages one of the first clutch 340 or the second clutch 360, and then, changes the gear stage on one of the first main shaft 321a or the second main shaft 321b connected to the disengaged clutch. Thereafter, the controller 307 causes the disengaged one of the first clutch 340 or the second clutch 360 to transition from the disengaged state to an engaged state through a semi-clutch state, while causing the engaged one of the first clutch 340 or the second clutch 360 to transition from the engaged state to the disengaged state through the semi-clutch state.

As one example of a gear-shift of the multi-stage automatic transmission 312, the case of shifting up the gear stage from a second speed to a third speed will be described. In this embodiment, the vehicle includes the shift switch 14 for allowing a driver to instruct changing of the gear stages to the multi-stage automatic transmission 312.

When the driver of the vehicle operates the shift switch 14 to perform a shift-up from the second speed to the third speed, the controller 307 controls driving of the first clutch actuator 315a so as to disengage the first clutch 340. Accordingly, torque transfer from the crankshaft 11a to the first main shaft 321a by way of the first clutch 340 is blocked. In this case, a torque of the crankshaft 11a is transferred to the output shaft 322 through the second clutch 360, the second main shaft 321b, the second-speed fixing gear 324a, the second-speed gear 324b, and the fourth spline gear 328b.

Next, the controller 307 controls driving of the shift actuator 316 to thereby cause the shift cam 331 to rotate by a predetermined angle. Accordingly, the shift fork 332 moves in the axial direction and connects the third spline gear 327b on the output shaft 322 to the third-speed gear 325b. Thus, the first main shaft 321a and the output shaft 322 are connected to each other to enable torque transfer through the first spline gear 325a, the third-speed gear 325b, and the third spline gear 327b. It should be noted that since the first clutch 340 is disengaged as described above, a torque of the crankshaft 11a is not transferred from the first main shaft 321a to the output shaft 322.

The controller 307 controls driving of the first clutch actuator 315a and the second clutch actuator 315b to thereby cause the first clutch 340 to transition from the disengaged state to the engaged state through the semi-clutch state, while causing the second clutch 360 to transition from the engaged state to the disengaged state through the semi-clutch state.

In this case, a torque transferred from the crankshaft 11a to the output shaft 322 through the first clutch 340, the first main shaft 321a, the first spline gear 325a, the third-speed gear 325b, and the third spline gear 327b gradually increases. On the other hand, a torque transferred from the crankshaft 11a to the output shaft 322 through the second clutch 360, the second main shaft 321b, the second-speed fixing gear 324a, the second-speed gear 324b, and the fourth spline gear 328b gradually decreases, and becomes zero when the second clutch 360 becomes disengaged.

As described above, in the multi-stage automatic transmission 312 of this embodiment, by changing the gear stages by using two clutches of the first clutch 340 and the second clutch 360, it is possible to prevent a torque from abruptly changing in changing the gear stages.

In the multi-stage automatic transmission 312 of this embodiment, at least one of the first clutch 340 or the second clutch 360 is always in the engaged state, and thus, a decrease in a driving force by clutch disengagement as described in the multi-stage automatic transmission 12 of the first embodiment does not occur. However, in the multi-stage automatic transmission 312, the driving force increases by shifting down the gear stage, and thus, a lean angle of the vehicle in turning in a lean state decreases. On the other hand, in the multi-stage automatic transmission 312, the driving force decreases by shifting up the gear stage, and thus, the lean angle of the vehicle in turning in the lean state increases. Thus, a posture of the vehicle changes by a changing of the gear stages in the multi-stage automatic transmission 312.

The shift-down is a gear-shift of changing the gear stages such that the gear-shift ratio increases. The shift-up is a gear-shift of changing the gear stages such that the gear-shift ratio decreases.

The controller 307 of the multi-stage automatic transmission 312 having the configuration of this embodiment has a configuration similar to that of the controller 7 of the first embodiment. That is, the controller 307 includes a lean angle calculator 72, a gear-shift control determiner 73, and a gear-shift signal generator 74. Configurations of these components are similar to those in the first embodiment, and thus, will not be described in detail.

In a manner similar to that of the controller 7 of the first embodiment, the controller 307 of this embodiment also inhibits changing of the gear stages in the multi-stage automatic transmission 312 based on a vehicle speed and a physical quantity associated with a lean angle of the vehicle.

Accordingly, while the vehicle turns in the lean state, a posture change occurring in the vehicle can be reduced.

(Other Embodiments)

The embodiments of the present invention have been described above, but the above embodiments are merely examples for carrying out the invention. Thus, the present invention is not limited to the embodiments, and the embodiments may be modified as necessary within a range not departing from the scope of the claimed invention.

In the first embodiment, the controller 7 inhibits changing the gear stages in the multi-stage automatic transmission 12 while the vehicle 1 turns in a lean state by using a vehicle speed and a physical quantity associated with a lean angle of the vehicle 1.

Alternatively, the controller may predict whether or not the lean angle of the vehicle 1 changes by changing the gear stages in the multi-stage automatic transmission while the vehicle turns in the lean state by using the lean angle of the vehicle only. In this case, if the lean angle is greater than or equal to a lean angle threshold, the controller may predict that the lean angle of the vehicle changes by changing the gear stages in the multi-stage automatic transmission.

The controller may predict whether or not the lean angle of the vehicle changes by changing the gear stages in the multi-stage automatic transmission while the vehicle turns in the lean state, based on the physical quantity associated with a radius of turn of a corner that the vehicle turns in the lean state.

While the vehicle turns in the lean state, the lean angle of the vehicle may change with a change of a driving force due to changing of the plurality of gear stages in the multi-stage automatic transmission, depending on the physical quantity associated with the radius of turn of the corner that the vehicle turns in the lean state. Accordingly, a change of the lean angle of the vehicle due to changing of the plurality of gear stages in the multi-stage automatic transmission can be predicted based on the physical quantity associated with the radius of turn.

The physical quantity associated with a centrifugal force includes at least one of a vehicle speed of the vehicle, a yaw rate of the vehicle, or a radius of curvature of a corner that the vehicle turns in a lean state. In this case, the controller may predict, for example, that the lean angle of the vehicle changes by changing the gear stages in the multi-stage automatic transmission if at least one of a condition that a vehicle speed of the vehicle is greater than or equal to a vehicle speed threshold, a condition that a yaw rate of the vehicle is greater than or equal to a yaw rate threshold, or a condition that a radius of curvature of a corner that the vehicle turns in the lean state is smaller than or equal to a radius of curvature threshold, is satisfied. The vehicle speed threshold, the yaw rate threshold and the radius of curvature threshold are, for example, set to such values that cause the lean angle of the vehicle to change by a changing of the gear stages in the multi-stage automatic transmission to thereby affect traveling of the vehicle. The physical quantity associated with a radius of turn includes at least one of a vehicle speed and a physical quantity associated with a lean angle of the leaning vehicle, the vehicle speed and a yaw rate of the leaning vehicle, or a radius of curvature of a corner that the leaning vehicle turns in a lean state, in a state where the leaning vehicle turns in the lean state.

As one example of gear-shift control based on the physical quantity associated with a centrifugal force exerted on the vehicle, the controller inhibits changing of the gear stages when the vehicle turns at a lean angle of 30 degrees at a vehicle speed of 20 km/h, while the controller permits changing of the gear stages when the vehicle turns at a lean angle of 30 degrees at a vehicle speed of 60 km/h.

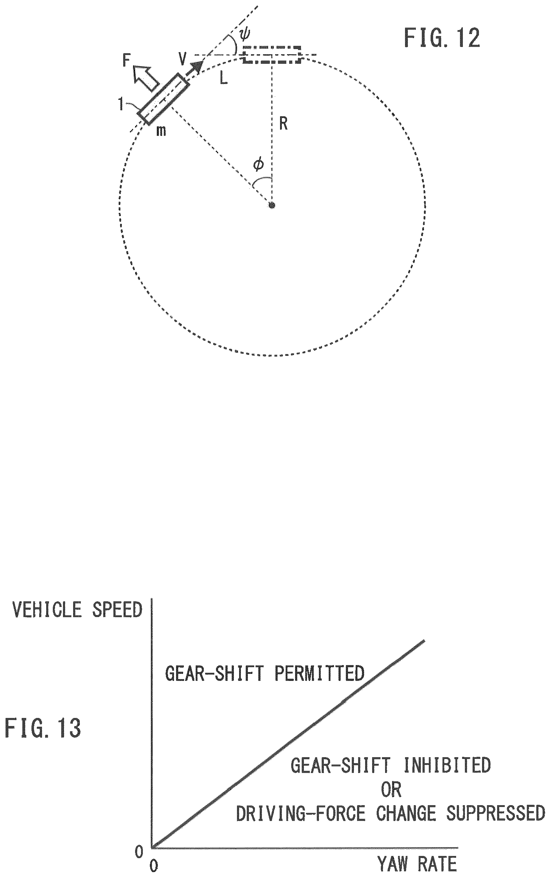

The following is the reason why the yaw rate is the physical quantity associated with a centrifugal force. As illustrated in FIG. 12, when the vehicle 1 turns at a radius of turn R, a centrifugal force F exerted on the vehicle 1 is expressed by the following expression, where m (kg) represents weight of the vehicle 1 and V (m/s) represents a vehicle speed.

$$F = mV^2/R$$

When $\psi$ (deg) represents a yaw angle in turning of the vehicle 1, $\varphi$ (deg) represents a turning angle of the vehicle 1, and L (m) represents a travel distance of the vehicle 1, the yaw angle $\psi$ and the turning angle $\varphi$ have the following relationship.

$$\psi = \varphi$$

The turning angle $\varphi$ and the travel distance L, and the vehicle speed V and the travel distance L, respectively, have the relationships as indicated below, where t represents a travel time of the vehicle 1.

$$L = R \times \varphi$$

$$L = V \times t$$

Therefore, the turning angle $\varphi$ and the vehicle speed V have the following relationship.

$$\varphi = V/R \times t$$

Therefore, the yaw angle $\psi$ and the radius of turn R have the following relationship.

$$\psi = V/R \times t$$

The yaw rate obtained from the above expression is expressed by the following expression.

$$Y = d\psi/dt = V/R$$

Therefore, the centrifugal force F exerted on the vehicle 1 and the yaw rate Y of the vehicle 1 have the following relationship.

$$F = mV^2/R = mRY^2$$

Thus, the yaw rate is the physical quantity associated with the centrifugal force.

The controller may predict whether or not the lean angle of the vehicle changes by changing the gear stages in the multi-stage automatic transmission while the vehicle turns in the lean state, based on the lean angle of the vehicle and the physical quantity associated with a centrifugal force exerted on the vehicle. In this case, the gear-shift control determination data includes data on a graph whose abscissa represents the lean angle of the vehicle and the ordinate represents the physical quantity associated with a centrifugal force exerted on the vehicle in FIGS. 6 and 8. In a case where the physical quantity associated with a centrifugal force exerted on the vehicle is the yaw rate, the gear-shift control determination data includes data as indicated in FIG. 13. The controller inhibits changing of the gear stages in the multi-stage automatic transmission or performs a gear-shift with a change of a driving force suppressed when the yaw rate is greater than a threshold, while permitting changing of the gear stages in the multi-stage automatic transmission when the yaw rate is smaller than the threshold, by using the gear-shift control determination data as indicated in FIG. 13.

In a case where the vehicle turns a plurality of corners, each having a different radius of curvature, in the lean state at the same lean angle, the controller may predict whether the lean angle of the vehicle changes or not by a changing of the gear stages in the multi-stage automatic transmission while the vehicle turns in the lean state, based on the radii of curvature of the corners. In this case, the controller may predict, for example, that the lean angle of the vehicle changes by a changing of the gear stages in the multi-stage automatic transmission when the radius of curvature of each of the corners is smaller than or equal to a threshold. The threshold is, for example, set to such a value that causes the lean angle of the vehicle to change by a changing of the gear stages in the multi-stage automatic transmission to thereby affect traveling of the vehicle.

The radii of curvature may be those geometrically obtained from map information, or those obtained by arithmetic calculation using a vehicle speed and a yaw rate of the vehicle.

The controller may determine whether the vehicle is turning in the lean state or not based on the lean angle of the vehicle, the physical quantity associated with a centrifugal force exerted on the vehicle, the map information, or the like, and thereafter predict whether the lean angle of the vehicle changes or not by changing of the gear stages in the multi-stage automatic transmission based on the lean angle of the vehicle, the physical quantity associated with a centrifugal force exerted on the vehicle, the map information, or the like.

In the first embodiment, as shown in FIG. 6, the gear-shift control determination data is data in which the threshold of a vehicle speed for inhibiting changing of the gear stages increases as the lean angle of the vehicle 1 increases. The gear-shift control determination data, however, may be any data as long as the threshold of the vehicle speed for inhibiting changing of the gear stage varies with respect to the lean angle. The gear-shift control determination data may be data in which the threshold of the vehicle speed for inhibiting changing of the gear stage is constant with respect to the lean angle.

In the variation of the first embodiment, as shown in FIG. 8, the gear-shift control determination data is data in which the threshold of a vehicle speed for permitting only changing of the gear stages capable of suppressing a change of the driving force increases as the lean angle of the vehicle 1 increases. The gear-shift control determination data, however, may be any data as long as the threshold of the vehicle speed for permitting only changing of the gear stages capable of suppressing a change of the driving force varies with respect to the lean angle. The gear-shift control determination data may be data in which the threshold of the vehicle speed for permitting only changing of the gear stages capable of suppressing a change of the driving force is constant with respect to the lean angle.

In the embodiments described above, a driving force is transferred from the engine unit 10 to the rear wheel 4 of the vehicle 1. Alternatively, a driving force may be transferred from the engine unit to the front wheel of the vehicle. In this case, the multi-stage automatic transmission changes a driving force to be transferred from the engine to the front wheel.

In the embodiments described above, the vehicle 1 includes the engine 11 as a driving source. Alternatively, the driving source of the vehicle may be a motor. The driving source may be a hybrid system using a combination of an engine and a motor.

In the embodiments described above, examples of the multi-stage automatic transmission are described. Alternatively, the multi-stage automatic transmission may be a transmission with any configuration as long as the transmission has a configuration including at least one clutch and a plurality of gear stages and capable of automatically changing the gear stages stepwise.

In the embodiments described above, the multi-stage automatic transmissions 12 and 312 are six-speed transmissions. Alternatively, the multi-stage automatic transmission may be a transmission for five speeds or less, or a transmission for seven or more speeds.

In the embodiments described above, the motorcycles have been described as examples of the vehicle. The vehicle, however, may be a vehicle other than a motorcycle as long as the vehicle is a leaning vehicle including a multi-stage automatic transmission.

REFERENCE SIGNS LIST

1 vehicle (leaning vehicle)
2 vehicle body
3 front wheel
4 rear wheel
7, 307 controller (gear-shift controller)
10 engine unit
11 engine (driving source)
11a crankshaft
12, 312 multi-stage automatic transmission
14 shift switch
15 clutch actuator
16 shift actuator
20, 320 transmission mechanism
21 main shaft
22 output shaft
23 driving gear
24 driven gear
40 clutch
46 input gear
50 shift mechanism
61 lean detector
62 vehicle speed detector
72 lean angle calculator
73 gear-shift control determiner
74 gear-shift signal generator
75 memory
315a first clutch actuator
315b second clutch actuator
321a first main shaft
321b second main shaft
322 output shaft
323a first-speed fixing gear
323b first-speed gear
324a second-speed fixing gear
324b second-speed gear
325a first spline gear
325b third-speed gear
326a second spline gear
326b fourth-speed gear
327a fifth-speed gear
327b third spline gear
328a sixth-speed gear
328b fourth spline gear
329 sprocket
340 first clutch
350 shift mechanism
360 second clutch
P rotation axis

## Claims

1. A leaning vehicle (1) that is configured to lean leftward when turning to the left and to lean rightward when turning to the right, the leaning vehicle (1) comprising:

   a vehicle body (2);
   a plurality of wheels (3, 4) including a front wheel (3) and a rear wheel (4);
   a driving source (11) configured to supply a driving force to at least one of the front wheel (3) or the rear wheel (4);
   a gear-type multi-stage automatic transmission (12, 312) including a plurality of gear stages and a clutch (40, 340, 360), and configured to change the driving force to be transferred from the driving source (11) to at least one of the front wheel (3) or the rear wheel (4) by automatically changing the plurality of the gear stages stepwise; and
   a gear-shift controller (7, 307) configured to control changing of the plurality of the gear stages in the multi-stage automatic transmission (12, 312), wherein
   the gear-shift controller (7, 307) is configured to inhibit changing of the plurality of the gear stages in the multi-stage automatic transmission (12, 312) or suppress a change of the driving force by changing the plurality of the gear stages, based on a physical quantity associated with a radius of turn of a corner that the leaning vehicle (1) turns in a lean state, while the leaning vehicle (1) turns in the lean state, wherein the lean state is a state in which the leaning vehicle (1) leans leftward or rightward with a rotation axis as a center relative to a vertical line of a road surface, wherein the physical quantity associated with the radius of turn includes at least one of a vehicle speed and a physical quantity associated with a lean angle of the leaning vehicle (1), the vehicle speed and a yaw rate of the leaning vehicle (1), or a radius of curvature of a corner that the leaning vehicle (1) turns in the lean state, in a state where the leaning vehicle (1) turns in the lean state, wherein the lean angle is an angle between the road surface and an up- down direction reference line of the leaning vehicle (1), and wherein the yaw rate is a rate of change in a yaw angle of the leaning vehicle when the leaning vehicle turns in the lean state.

2. The leaning vehicle (1) according to claim 1, wherein in a case where the leaning vehicle (1) turns a plurality of corners, each having a different radius of curvature, in the lean state at a same lean angle, the gear-shift controller (7, 307) is configured to inhibit changing of the plurality of the gear stages in the multi-stage automatic transmission (12, 312) or suppress a change of the driving force by changing the plurality of the gear stages, in accordance with the radius of curvature of each of the corners, while the leaning vehicle (1) turns in the lean state.

3. The leaning vehicle (1) according to claim 1, wherein the gear-shift controller (7, 307) is configured to inhibit changing of the plurality of the gear stages in the multi-stage automatic transmission (12, 312) or suppress a change of the driving force by changing the plurality of the gear stages while the leaning vehicle (1) turns in the lean state in a case where the radius of curvature of each of the corners that the leaning vehicle (1) turns in the lean state is smaller than or equal to a threshold.

## Patentansprüche

1. Ein Neigungsfahrzeug (1), das konfiguriert ist, sich beim Linksabbiegen nach links zu neigen und beim Rechtsabbiegen nach rechts zu neigen, wobei das Neigungsfahrzeug (1) folgende Merkmale aufweist:

   einen Fahrzeugkörper (2);
   eine Mehrzahl von Rädern (3, 4), die ein Vorderrad (3) und ein Hinterrad (4) umfasst;
   eine Antriebsquelle (11), die konfiguriert ist, zumindest einem des Vorderrads (3) oder des Hinterrads (4) eine Antriebskraft zuzuführen;
   ein Mehrstufenautomatikgetriebe vom Getriebetyp (12, 312), das eine Mehrzahl von Getriebestufen und eine Kupplung (40, 340, 360) umfasst, und konfiguriert ist, die Antriebskraft, die von der Antriebsquelle (11) zu zumindest einem des Vorderrads (3) oder des Hinterrads (4) zu übertragen ist, durch automatisches Ändern der Mehrzahl von Getriebestufen stufenweise zu ändern; und
   eine Gangschaltungssteuerung (7, 307), die konfiguriert ist, das Ändern der Mehrzahl von Getriebestufen in dem Mehrstufenautomatikgetriebe (12, 312) zu steuern, wobei
   die Gangschaltungssteuerung (7, 307) konfiguriert ist, das Ändern der Mehrzahl von Getriebestufen in dem Mehrstufenautomatikgetriebe (12, 312) zu unterbinden oder eine Änderung der Antriebskraft durch Ändern der Mehrzahl von Getriebestufen zu unterdrücken, basierend auf einer physikalischen Größe, die einem Kurvenradius einer Ecke zugeordnet ist, um die das Neigungsfahrzeug (1) in einem geneigten Zustand abbiegt, während das Neigungsfahrzeug (1) in dem geneigten Zustand abbiegt, wobei der geneigte Zustand ein Zustand ist, in dem sich das Neigungsfahrzeug (1) mit einer Drehachse als eine Mitte relativ zu einer vertikalen Linie einer Straßenoberfläche nach links oder rechts neigt,

wobei die physikalische Größe, die dem Kurvenradius zugeordnet ist, zumindest eine einer Fahrzeuggeschwindigkeit und einer physikalischen Größe, die einem Neigungswinkel des Neigungsfahrzeugs (1) zugeordnet ist, der Fahrzeuggeschwindigkeit und einer Gierrate des Neigungsfahrzeugs (1) oder einen Krümmungsradius einer Ecke umfasst, um die das Neigungsfahrzeug (1) in dem geneigten Zustand abbiegt, in einem Zustand, in dem das Neigungsfahrzeug (1) in dem geneigten Zustand abbiegt, wobei der Neigungswinkel ein Winkel zwischen der Straßenoberfläche und einer Aufwärts-Abwärts-Richtung-Referenzlinie des Neigungsfahrzeugs (1) ist, und wobei die Gierrate eine Änderungsrate eines Gierwinkels des Neigungsfahrzeugs ist, wenn das Neigungsfahrzeug in dem geneigten Zustand abbiegt.

2. Das Neigungsfahrzeug (1) gemäß Anspruch 1, bei dem
in einem Fall, in dem das Neigungsfahrzeug (1) in dem geneigten Zustand in einem gleichen Neigungswinkel um eine Mehrzahl von Ecken biegt, die jeweils einen anderen Krümmungsradius aufweisen, die Gangschaltungssteuerung (7, 307) konfiguriert ist, das Ändern der Mehrzahl von Getriebestufen in dem Mehrstufenautomatikgetriebe (12, 312) zu unterbinden oder eine Änderung der Antriebskraft durch Ändern der Mehrzahl von Getriebestufen zu unterdrücken, gemäß dem Krümmungsradius von jeder der Ecken, während das Neigungsfahrzeug (1) in dem geneigten Zustand abbiegt.

3. Das Neigungsfahrzeug (1) gemäß Anspruch 1, bei dem
die Gangschaltungssteuerung (7, 307) konfiguriert ist, das Ändern der Mehrzahl von Getriebestufen in dem Mehrstufenautomatikgetriebe (12, 312) zu unterbinden oder eine Änderung der Antriebskraft durch Ändern der Mehrzahl von Getriebestufen zu unterdrücken, während das Neigungsfahrzeug (1) in dem geneigten Zustand abbiegt, in einem Fall, in dem der Krümmungsradius von jeder der Ecken, um die das Neigungsfahrzeug (1) in dem geneigten Zustand abbiegt, kleiner als oder gleich wie ein Schwellenwert ist.

**Revendications**

1. Véhicule à inclinaison (1) qui est configuré pour s'incliner vers la gauche lors d'un virage à gauche et pour s'incliner vers la droite lors d'un virage à droite, le véhicule à inclinaison (1) comprenant:

une carrosserie de véhicule (2);
une pluralité de roues (3, 4) comportant une roue avant (3) et une roue arrière (4);
une source d'entraînement (11) configurée pour alimenter une force d'entraînement vers au moins l'une parmi la roue avant (3) ou la roue arrière (4);
une transmission automatique à plusieurs étages de type engrenage (12, 312) comportant une pluralité d'étages d'engrenage et un embrayage (40, 340, 360), et configurée pour changer la force d'entraînement à transférer de la source d'entraînement (11) à au moins au moins l'une parmi la roue avant (3) ou la roue arrière (4) en changeant automatiquement et pas à pas la pluralité des étages d'engrenage; et
un moyen de commande de changement de vitesse (7, 307) configuré pour commander le changement de la pluralité des étages d'engrenage dans la transmission automatique à plusieurs étages (12, 312),
dans lequel
le moyen de commande de changement de vitesse (7, 307) est configuré pour empêcher le changement de la pluralité des étages d'engrenage dans la transmission automatique à plusieurs étages (12, 312) ou pour supprimer un changement de la force d'entraînement en changeant la pluralité des étages d'engrenage, sur base d'une grandeur physique associée à un rayon de virage d'une courbe dans laquelle vire le véhicule à inclinaison (1) dans un état incliné, tandis que le véhicule à inclinaison (1) vire dans l'état incliné, où l'état incliné est un état dans lequel le véhicule à inclinaison (1) s'incline vers la gauche ou vers la droite avec un axe de rotation comme centre par rapport à une ligne verticale d'une surface de route,
dans lequel la grandeur physique associée au rayon de virage comporte au moins l'un parmi une vitesse du véhicule et une grandeur physique associée à un angle d'inclinaison du véhicule à inclinaison (1), la vitesse du véhicule et une vitesse de lacet du véhicule à inclinaison (1), ou un rayon de courbure d'une courbe dans laquelle vire le véhicule à inclinaison (1) dans l'état incliné, dans un état où le véhicule à inclinaison (1) vire dans l'état incliné, où l'angle d'inclinaison est un angle entre la surface de la route et un ligne de référence de direction de haut en bas du véhicule à inclinaison (1), et où le taux de lacet est un taux de changement d'un angle de lacet du véhicule à inclinaison lorsque le véhicule à inclinaison vire dans l'état incliné.

2. Véhicule à inclinaison (1) selon la revendication 1, dans lequel
au cas où le véhicule à inclinaison (1) vire dans une pluralité de courbes, chacune présentant un rayon de courbure différent, dans l'état incliné selon un même angle d'inclinaison, le moyen de commande de changement de vitesse (7, 307) est configuré pour empêcher le changement de la pluralité des étages d'engrenage dans la transmission automatique à plusieurs étages (12, 312) ou pour supprimer un changement de la force d'entraînement en changeant la pluralité des étages d'engrenage, selon le rayon de courbure de chacune des courbes, tandis que le véhicule à inclinaison (1) vire dans l'état incliné.

3. Véhicule à inclinaison (1) selon la revendication 1, dans lequel
le moyen de commande de changement de vitesse (7, 307) est configuré pour empêcher le changement de la pluralité des étages d'engrenage dans la transmission automatique à plusieurs étages (12, 312) ou pour supprimer un changement de la force d'entraînement en changeant la pluralité des étages d'engrenage tandis que le véhicule à inclinaison (1) vire dans l'état incliné au cas où le rayon de courbure de chacune des courbes dans laquelle vire le véhicule à inclinaison (1) dans l'état incliné est inférieur ou égal à un seuil.

FIG.1

FIG. 2

FIG. 3

FIG. 4

7

CONTROLLER

75

MEMORY

73

62 VEHICLE SPEED
DETECTOR

GEAR-SHIFT
CONTROL
DETERMINER

GEAR-SHIFT
CONTROL
DETERMINATION
SIGNAL

GEAR-SHIFT
SIGNAL
GENERATOR ~74

61 LEAN DETECTOR

LEAN ANGLE
CALCULATOR ~72

GEAR-SHIFT
SIGNAL

FIG. 5

MULTI-STAGE AUTOMATIC
TRANSMISSION ~12

FIG. 6

VEHICLE SPEED

GEAR-SHIFT PERMITTED

GEAR-SHIFT INHIBITED

0

0

LEAN ANGLE

START

ACQUIRE LEAN ANGULAR VELOCITY
AND VEHICLE SPEED — SA1

CALCULATE LEAN ANGLE — SA2

SA3

IS COMBINATION OF
VEHICLE SPEED AND LEAN ANGLE
WITHIN GEAR-SHIFT
INHIBITED RANGE?

NO

YES

SA4 — INHIBIT GEAR-SHIFT

PERMIT GEAR-SHIFT — SA5

END

FIG. 7

27

VEHICLE SPEED

GEAR-SHIFT PERMITTED

FIG. 8

DRIVING-FORCE CHANGE
SUPPRESSED

0
0                                    LEAN ANGLE

START

ACQUIRE LEAN ANGULAR VELOCITY
AND VEHICLE SPEED — SB1

CALCULATE LEAN ANGLE — SB2

SB3

IS COMBINATION OF
VEHICLE SPEED AND LEAN
ANGLE WITHIN DRIVING-FORCE
CHANGE SUPPRESSED
RANGE?

FIG. 9

NO

YES

SB4 — PERMIT GEAR-SHIFT
IN RANGE WHERE DRIVING-FORCE
CHANGE CAN BE SUPPRESSED

PERMIT GEAR-SHIFT — SB5

END

FIG. 10

FIG. 11

FIG. 12

FIG. 13

VEHICLE SPEED

GEAR-SHIFT PERMITTED

GEAR-SHIFT INHIBITED
OR
DRIVING-FORCE CHANGE SUPPRESSED

YAW RATE

CONTROLLER

75 MEMORY

73 GEAR-SHIFT CONTROL DETERMINER

74 GEAR-SHIFT SIGNAL GENERATOR

72 LEAN ANGLE CALCULATOR

62 VEHICLE SPEED DETECTOR

61 LEAN DETECTOR

GEAR-SHIFT SIGNAL

MULTI-STAGE AUTOMATIC TRANSMISSION 12

7

15 CLUTCH ACTUATOR

7 CONTROLLER

12

20

23 23a

24 24a

24a

U
F RR

9 2

4

P 11 12

3 62

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012197809 A
- DE 102012200471 A1
- US 2007186705 A1
- JP 2015117798 A
- JP 2010133555 A